Europäisches Patentamt

European Patent Office

Office européen des brevets

(19)

(11) **EP 0 762 619 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(51) Int Cl.⁷: **H02K 29/03**, H02K 21/02, H02K 1/06, H02P 6/10

(21) Anmeldenummer: **96113465.7**

(22) Anmeldetag: **22.08.1996**

(54) **Verfahren und Vorrichtung zur Reduzierung des sogenannten Nutruckens bei einem Elektromotor**

Method and device for reducing cogging in an electric motor

Méthode et dispositif pour réduire la pulsation du couple dans un moteur électrique

(84) Benannte Vertragsstaaten:
**AT DE FR GB IT NL SE**

(30) Priorität: **28.08.1995 DE 19531584**

(43) Veröffentlichungstag der Anmeldung:
**12.03.1997 Patentblatt 1997/11**

(73) Patentinhaber: **ebm-papst St. Georgen GmbH & Co. KG**
**78112 St. Georgen (DE)**

(72) Erfinder: **Burgbacher, Martin, Ing.**
**78112 St. Georgen (DE)**

(74) Vertreter: **Raible, Hans, Dipl.-Ing. et al**
**Raible & Raible**
**Patentanwälte**
**Schoderstrasse 10**
**70192 Stuttgart (DE)**

(56) Entgegenhaltungen:
EP-A- 0 182 702          GB-A- 2 246 481
US-A- 4 672 253

• DRAEGER J: "REDUZIERUNG VON RELUKTANZMOMENTEN REDUCING RELUCTANCE TORQUE" F & M. FEINWERKTECHNIK MIKROTECHNIK MESSTECHNIK, Bd. 103, Nr. 7/08, 1.August 1995, Seiten 433-436, XP000524176
• PATENT ABSTRACTS OF JAPAN vol. 010, no. 384 (E-466), 23.Dezember 1986 & JP 61 173656 A (SONY CORP), 5.August 1986,
• PATENT ABSTRACTS OF JAPAN vol. 011, no. 077 (E-487), 7.März 1987 & JP 61 231861 A (SONY CORP), 16.Oktober 1986,

**Beschreibung**

Bei Elektromotoren mit einem permanentmagnetischen Rotor, bei welchem die sogenannte Magnetisierung der Rotorpole, also deren in Umfangsrichtung gemessene Verteilung der Magnetflußdichte, von der Sinusform abweicht, erhält man, wenn ein mit Nutöffnungen versehener Stator, auch als "genuteter Stator" bezeichnet, verwendet wird, das Phänomen, daß die Grenzen zwischen den einzelnen Rotorpolen, die sogenannten Polgrenzen, die Stellen größten Luftspalts suchen. Für den Betrachter hat es deshalb den Anschein, als würden diese Polgrenzen von den Nuten des Stators angezogen und würden in diese Nuten sozusagen "hineinfallen". Diesen Effekt bezeichnet man auf Englisch als "cogging", auf Deutsch als "Nutrucken".

Dieser Effekt wird erzeugt durch ein sogenanntes Reluktanzmoment, d.h. bei der Drehung des Rotors relativ zum Stator wird im magnetischen Kreis des Motors in bestimmten Drehwinkelbereichen magnetische Energie gespeichert, und in anderen Drehwinkelbereichen wird diese magnetische Energie freigegeben. Zum Speichern muß dem Motor von außen Energie zugeführt werden, d.h. der Rotor wird hierdurch gebremst, und umgekehrt wirkt dort, wo gespeicherte Energie freigegeben wird, der Rotor antreibend.

Dreht man den Rotor eines solchen Motors von Hand, so hat man den Eindruck, daß man "jede Nut spürt".

Dieses Reluktanzmoment wirkt bei vielen Antriebsaufgaben sehr störend, so daß man dort gezwungen ist, eisenlose Statorwicklungen zu verwenden, bei denen kein Reluktanzmoment auftritt, doch ist die Leistung solcher Motoren mit eisenlosem Stator meist nicht ausreichend.

Aus der DE 1 763 769 A ist es bekannt, zur Reduzierung des Nutruckens in den Eisenteilen des Stators zusätzliche Vertiefungen vorzusehen, welche so wirken, als würde die Nutzahl des Stators verdoppelt. Dies bewirkt aber nur eine Verdoppelung der Frequenz des Reluktanzmoments. Seine Amplitude wird hierdurch nicht beeinflusst.

Dies gilt in gleicher Weise für die analogen Lösungen nach der US 36 31 272 oder der FR 15 35 489, Fig. 1. Es wird nur die Frequenz des Reluktanzmoments erhöht, so dass es durch entsprechende Dämpfungsglieder leichter ausgefiltert werden kann.

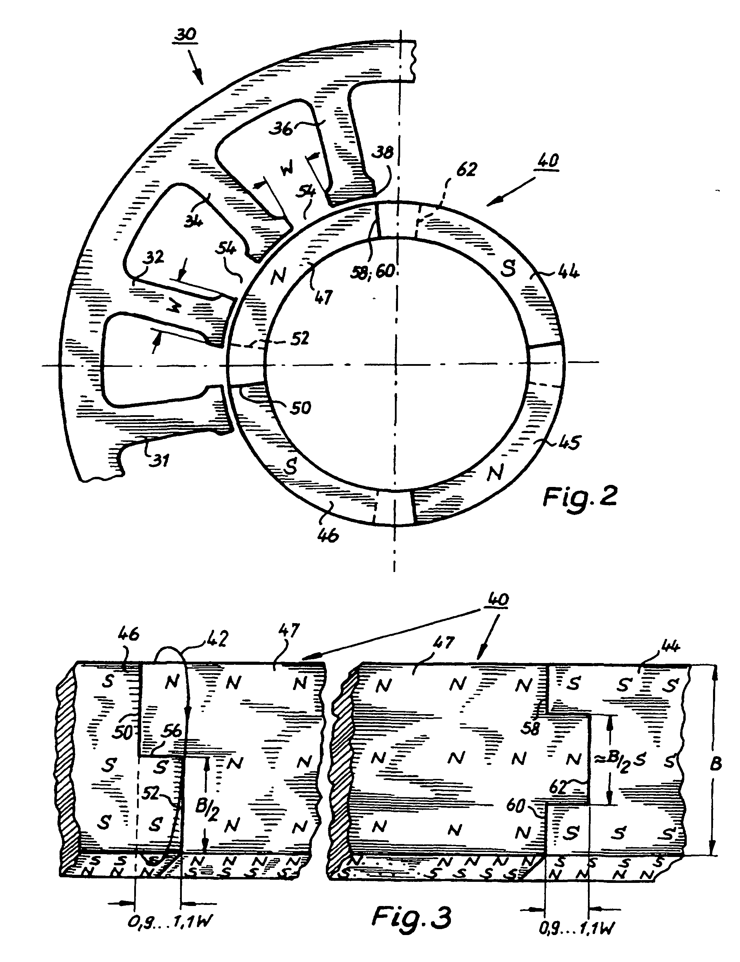

Aus der GB 22 46 481 A ist es bekannt, dass Nutrucken bei einem elektronisch kommutierten Motor dadurch zu reduzieren, dass man die Polgrenzen zwischen benachbarten Rotorpolen schräg ausführt Man sagt dann, dass die Polgrenzen "geschrägt" werden. Dies bringt eine Verbesserung des Nutruckens, aber auch eine Reduzierung der Motorleistung, weil sich bei einer solchen Version die Flüsse benachbarter Pole teilweise direkt kurzschließen. Dies wird nachfolgend anhand der. Fig. 3, dort Bezugszeichen 42, erläutert. Je mehr also die Polgrenzen geschrägt werden, um so mehr sinkt die Leistung eines solchen Motors.

Die japanische Patentoffenlegungsschrift 61-173 656 A zeigt einen Motor mit starker Schrägung der Polgrenzen, wobei die Pole in Umfangsrichtung zusätzliche Fortsätze haben. Diese Fortsätze bewirken eine zusätzliche Reduzierung der magnetischen Nutzflüsse, so dass sie die verfügbare Motorleistung weiter verringern.

Die japanische Patent-Offenlegungsschrift 61-231 861 A zeigt ebenfalls einen Motor mit starker Schrägung der Polgrenzen. Zusätzlich befindet sich in der Mitte eines geschrägten Nordpols noch ein Südpolbereich, und in der Mitte eines geschrägten Südpols befindet sich ein Nordpolbereich. Diese Bereiche entgegengesetzter Polarität bewirken ebenfalls eine zusätzliche Verringerung der magnetischen Nutzflüsse, d. h. die Motorleistung wird sowohl durch die Schrägung der Polgrenzen reduziert, wie auch durch die polinneren Bereiche mit entgegengesetzter Polarität.

Die Schrägung der Polgrenzen der Rotorpole ist auch bekannt aus der Literaturstelle Dräger in Feinwerktechnik Mikrotechnik Messtechnik Band 103, Nr. 7/08 vom 01. August 1995, 433 bis 436. Dort wird eine Schrägung um eine Nutteilung angegeben, was einen sehr starken Verlust an magnetischem Nutzfluss zur Folge hat. Auch ist dort im Bild 12 ein genuteter Stator mit 10 Statorzähnen und 4 Rotorpolen dargestellt, wobei die Rotorpole aus 4 Ringen zusammengesetzt sind, die nach bestimmten Rechenregeln gegeneinander versetzt sind.

Es ist eine Aufgabe der Erfindung ein neues Verfahren zum Reduzieren eines solchen Reluktanzmoments, und einen entsprechenden neuen Motor, bereitzustellen.

Nach einem ersten Aspekt der Erfindung wird diese Aufgabe gelöst durch einen Elektromotor gemäß Patentanspruch 1. Motoren mit genutetern Stator, bei denen die Zahl der Statorzähne durch die Zahl der Rotorpole ganzzahlig teilbar ist, und bei denen die Rotorpole eine sog. "rechteckförmige" Magnetisierung haben, stellen vom Gesichtspunkt des Nutruckens den worst case dar, da das Nutrucken bei ihnen besonders ausgeprägt ist. Durch die Erfindung gelingt es in sehr einfacher Weise, das Reluktanzmoment, welches dieses Nutrucken verursacht, weitgehend zu kompensieren, und zwar ohne dass dabei ein großer Teil des Magnetflusses der Rotorpole nutzlos verpufft, also nichts zur Erzeugung eines antreibenden elektromagnetischen Drehmoments beiträgt. Zudem gelingt dies praktisch ohne Mehrkosten Im einfachsten Fall gelingt dies dadurch, dass zusätzlich zu dem ersten Reluktanzmoment, das sozusagen in den Motor eingebaut ist, ein zweites Reluktanzmoment erzeugt wird, das im Wesentlichen spiegelbildlich zum ersten Reluktanzmoment verläuft und dieses folglich durch Überlagerung reduziert oder auslöscht.

Eine bevorzugte Weiterbildung der Erfindung ist Gegenstand des Patentanspruchs 8. Solche Hilfsnuten erlauben es in überraschender Weise, den Nutzfluss der Rotormagnete weiter zu erhöhen, weil der Bereich eines Rotormagneten, der zur Reduzierung des Nutruckens getreppt werden muss und folglich nicht zur Motorleistung beiträgt, hierdurch noch weiter verkleinert werden kann.

Man erhält also durch einfache Maßnahmen, die praktisch keine Mehrkosten verursachen, eine starke Reduzierung des Nutruckens.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:

Fig. 1 ein Schaubild, welches bei a) in abgewickelter Form die Magnetisierung eines Rotormagneten und bei b) dessen - in Umfangsrichtung gemessene - Verteilung der Magnetflußdichte B zeigt; eine solche Verteilung wird als "trapezförmige Magnetisierung", gelegentlich auch als "rechteckförmige Magnetisierung", bezeichet,

Fig. 2 ein erstes Ausführungsbeispiel der Erfindung in Ausschnitt-darstellung; der Stator ist - bis auf die Form der dem Luftspalt zugewandten Zähne - gleich aufgebaut wie der Stator der Fig. 5,

Fig. 3 zwei Varianten für die Form der Polgrenzen des Magneten des Rotors 40 der Fig. 1, in abgewickelter Form,

Fig. 4 eine abgewickelte Darstellung des Rotors der Fig. 1, zusammen mit Kurven zur Erläuterung seiner Wirkungsweise,

Fig. 5 ein zweites Ausführungsbeispiel der Erfindung,

Fig. 6 die Darstellung einer Polgrenze für den Motor nach Fig. 5; die drei anderen Polgrenzen sind bevorzugt in der gleichen Weise ausgebildet,

Fig. 7 eine Darstellung einer gesehnten, dreisträngigen Statorwicklung, wie sie bei dem Motor der Fig. 5 (oder der Fig. 1, oder der Fig. 16 und 20) verwendet werden kann,

Fig. 8 eine schematische Darstellung einer Vollbrückenschaltung zum Betrieb des Motors nach den Fig. 1, 5, 16 oder 20,

Fig. 9 eine Darstellung der Kommutierungsfolge für die Vollbrückenschaltung der Fig. 8,

Fig. 10 die Darstellung einer typischen induzierten Spannung, gemessen bei einem Motor mit einer gesehnten Wicklung gemäß Fig. 7,

Fig. 11 eine Darstellung zur Erläuterung der Wirkungsweise des Motors nach Fig. 5,

Fig. 12 eine Variante zum Motor nach dem zweiten Ausführungsbeispiel,

Fig. 13 eine stark vergrößerte Darstellung eines mit einer Hilfsnut versehenen Statorzahns beim Motor der Fig. 5,

Fig. 14 die Darstellung eines beim Motor der Fig. 5 gemessenen restlichen Reluktanzmoments,

Fig. 15 charakteristische Werte für den Motor der Fig. 5, über der Drehzahl aufgetragen,

Fig. 16 ein drittes Ausführungsbeispiel der Erfindung,

Fig. 17 die Darstellung einer Polgrenze für den Motor der Fig. 16; die drei anderen Polgrenzen haben bevorzugt dieselbe Form,

Fig. 18 eine Variante zu Fig. 17, welche gegenüber Fig. 17 den Vorzug einer besseren Symmetrie hat, wodurch axiale Kräfte auf den Rotor weitgehend vermieden werden,

Fig. 19 eine Darstellung zur Erläuterung des Motors nach dem dritten Ausführungsbeispiel,

Fig. 20 ein viertes Ausführungsbeispiel der Erfindung, in schematischer Darstellung analog Fig. 4, Fig. 11 oder Fig. 19,

Fig. 21 die Darstellung einer Polgrenze für den Motor nach Fig. 20; die drei anderen, nicht dargestellten Polgrenzen haben bevorzugt dieselbe Form,

Fig. 22 eine Variante zu Fig. 20,

Fig. 23 eine Darstellung zur Erläuterung von Fig. 20, und

Fig. 24 die Darstellung einer symmetrischen Ausführung der Polgrenze für den Motor nach Fig. 20; die anderen, nicht dargestellten Polgrenzen dieses Rotors 104" haben bevorzugt dieselbe Form.

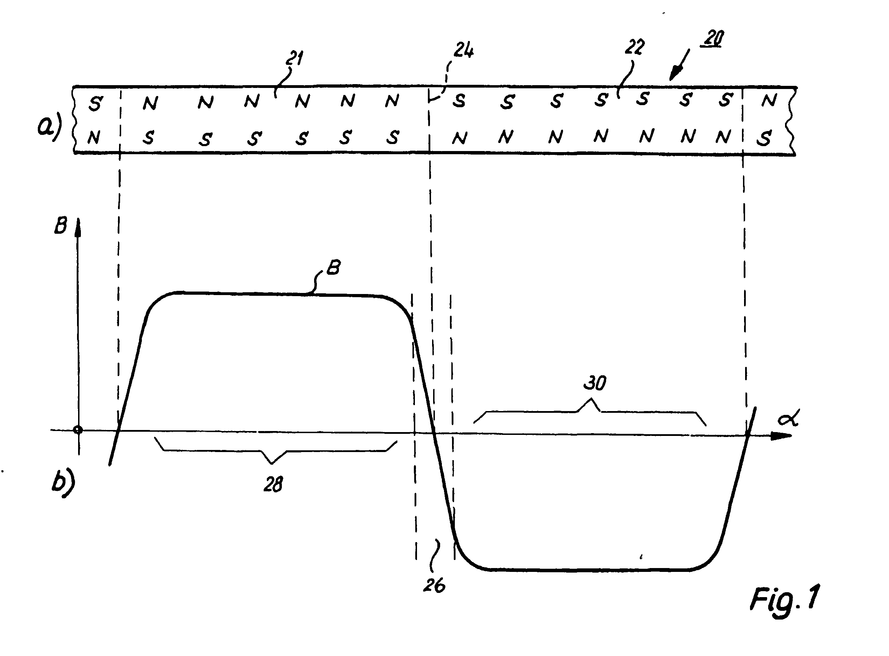

**Fig. 1** zeigt bei a) schematisch und in abgewickelter (developed) Form die Magnetisierung eines Rotormagneten 20, und zwar hat dieser Rotormagnet auf seiner Oberseite links einen Nordpol 21 und rechts einen Südpol 22. Diese Pole 21, 22 sind voneinander getrennt durch eine Polgrenze 24, an der also die Magnetflußdichte B = 0 ist, wie in Fig. 1b dargestellt. Da der Rotormagnet 20 häufig aus einem einzigen Stück besteht, kann man die Polgrenze 24 mit dem Auge gewöhnlich nicht erkennen, sondern nur mit Hilfe spezieller Folien, welche solche Grenzen sichtbar machen. Der Rotormagnet 20 kann aber auch aus verschiedenen Teilen zusammengesetzt sein, und in diesem Fall kann man die Polgrenze sehen.

Derartige Rotormagnete werden häufig aus sogenannten seltenen Erden hergestellt, z.B. aus Samarium-Kobalt, oder aus Neodym. Sie haben eine sehr hohe Magnetflußdichte B, und die Form ihrer Magnetflußdichte über dem Umfang ist bevorzugt, wie in Fig. 1 b dargestellt, im wesentlichen trapezförmig. Eine solche Magnetisierung bezeichnet man gelegentlich auch als "rechteckförmig", doch ist eine vollständig rechteckförmige Magnetisierung nicht möglich. Man bemüht sich aber, die sogenannte Pollücke 26, d.h. das Gebiet des Rotors, wo der Übergang von einem Nordpol zu einem Südpol (oder umgekehrt) stattfindet, möglichst schmal zu machen, weil dann ein Motor, der mit einem solchen Rotormagneten 20 ausgerüstet ist, seine maximale Leistung erbringt.

Diese Art der Magnetisierung ist für den Wirkungsgrad eines Motors günstig, doch reagieren Motoren, die mit derartigen hochpermeablen Permanentmagneten ausgerüstet sind, sehr empfindlich auf Diskontinuitäten auf der Statorseite des Luftspalts. Der Benutzer hat den Eindruck, daß die Pollücken 26 Stellen des Stators suchen, an denen der Luftspalt zwischen Stator und Rotor sein Maximum hat. Man nennt das auf Deutsch das Nutrucken, und auf Englisch "cogging" oder "cogging torque".

Der Eindruck, daß die Pollücken 26 magnetische Effekte verursachen, ist selbstverständlich unrichtig, denn dort ist ja der Magnet sehr schwach. Die magnetischen Effekte werden vielmehr durch diejenigen Zonen 28, 30 des Rotormagneten 20 verursacht, an denen die magnetische Flußdichte B ihr Maximum hat. Für die Anschauung ist es aber nützlich (wenn auch physikalisch falsch), sich die magnetischen Wirkungen, welche das Nutrucken verursachen, in der Pollücke 26 bzw. an der Polgrenze 24 konzentriert zu denken.

Dieses Nutrucken ist bei vielen Anwendungen nicht akzeptabel, und daher können dort derartige Motoren bisher nur verwendet werden, wenn sie einen Luftspalt haben, der von Diskontinuitäten weitgehend frei ist. Dies gilt besonders für Motoren, die einen genuteten Stator haben und bei denen die Zahl der Statorzähne durch die Zahl der Rotorpole ganzzahlig teilbar ist, z.B. zwölf Statorzähne und vier Rotorpole. Der Quotient 12: 4 ergibt 3, und solche Motoren mit ganzzahligen Quotienten sind für das Nutrucken ganz besonders anfällig.

**Fig. 2** zeigt einen Ausschnitt aus einem erfindungsgemäßen Motor, an welchem die Grundprinzipien der vorliegenden Erfindung erläutert werden sollen. Vom Stator 30 dieses Motors ist nur etwa ein Viertel dargestellt, nämlich nur vier der insgesamt zwölf Statorzähne in Gestalt der Statorzähne 31, 32, 34, 36, welche durch einen Luftspalt 38 von einem vierpolig magnetisierten Rotor 40 getrennt sind, dessen Form der Magnetisierung Besonderheiten aufweist, die in Fig. 3 dargestellt sind.

Zu Fig. 3 ist darauf hinzuweisen, daß diese zwei Alternativen darstellt, von denen die eine links dargestellt ist, die andere rechts. Bei der linken Alternative entsteht eine axiale Kraft auf den Rotormagneten 40, was zusätzliche Geräusche bewirkt.Bei der rechten Alternative entsteht diese axiale Kraft nicht, und deshalb ist die rechte Alternative vorzuziehen.

Gemäß Fig. 2 hat der Rotor 40 vier Pole 44, 45, 46 und 47, welche gemäß Fig. 1 trapezförmig magnetisiert sind. Fig. 3 zeigt hiervon nur - in abgewickelter Form - die Pole 44, 46 und 47, sowie die Polgrenzen zwischen diesen.

Gemäß Fig. 3 hat der Rotormagnet 40 eine Breite B, und die Polgrenze zwischen dem Südpol 46 und dem Nordpol 47 hat einen oberen Abschnitt 50, der sich etwa über die halbe Rotorbreite B/2 erstreckt und parallel zu den Nutzähnen 31, 32 etc. verläuft. Ferner hat diese Polgrenze einen unteren Abschnitt 52, der sich ebenfalls etwa über eine halbe Rotorbreite B/2 erstreckt, aber zum oberen Abschnitt 50 um einen bestimmten Abstand etwa parallel und in Umfangsrichtung versetzt ist.

Wie Fig. 2 zeigt, haben beim Stator 30 die Nutschlitze oder -öffnungen 54 die Breite W, und dieselbe Breite W haben auch die Statorzähne 31, 32, 34, 36 an ihrer dem Rotor 40 gegenüberliegenden Seite.

Etwa um diese Breite W, nämlich um etwa 0,9 ... 1,1 W, sind bei dieser Ausführungsform auch die Abschnitte 50, 52 der beschriebenen Polgrenze gegeneinander versetzt. Dies gilt in gleicher Weise für die drei anderen Polgrenzen dieses Rotors 40, die nicht dargestellt sind.

Wie man in Fig. 3 erkennt, hat diese Form der Polgrenze 50, 52 den Effekt, daß etwa in Umfangsrichtung des Rotors 40 ebenfalls ein Abschnitt 56 der Polgrenze verläuft, welcher die Abschnitte 50, 52 miteinander verbindet. In der Praxis verläuft der Abschnitt 56 meist schräg, wie in den nachfolgenden Figuren dargestellt, da er durch eine entsprechende Magnetisierungs-vorrichtung erzeugt wird, deren Aufbau dem Fachmann geläufig ist. Quer zu diesem Abschnitt 56 verläuft ein Streufluß 42, der den Rotormagneten 40 schwächt. Deshalb ist es wichtig, diesen Abschnitt 56 möglichst kurz zu halten. Die nachfolgenden Ausführungsbeispiele zeigen, wie man dieses Ziel erreichen kann.

Bei der in Fig. 3 rechts dargestellten Variante hat man oben einen Abschnitt 58 der Polgrenze, der z. B. etwa 25 % der Polbreite B betragen kann, und ebenso unten einen Abschnitt 60 der Polgrenze, der mit dem Abschnitt 58 fluchtet und ebenfalls z.B. 25 % der Polbreite B betragen kann. Ferner hat man in der Mitte einen Abschnitt 62, der etwa die Länge B/2 haben kann (gewöhnlich etwas weniger, da der Rotormagnet 40 in seiner Mitte am stärksten ist). Dieser Abschnitt 62 ist zu den Abschnitten 58 und 60 ebenfalls um den vorgegebenen Abstand versetzt, nämlich um 0,9 ... 1, 1W, wie in Fig. 3 angegeben. Man wird bevorzugt die Polgrenzen zwischen allen vier Polen des Rotors 40 gemäß dieser Polgrenze 58, 60, 62 symmetrisch ausbilden, wodurch diese Polgrenzen etwa die Form eines Pfeils haben. Dies hat den Vorteil, daß hierbei auf den Rotor 40 keine axiale Kraft erzeugt wird, während bei der Form der Polgrenze 50, 52 eine axiale Kraft auf den Rotor 40 einwirkt, wenn sich dieser innerhalb eines Stators 30 befindet.

Wie aus Fig. 3 hervorgeht, ist nur wesentlich, daß man Polgrenzen mit bestimmten Längenverhältnissen hat, die gegeneinander um einen vorgegebenen Betrag versetzt sind. Wie diese Polgrenzen nebeneinander angeordnet sind, kann zusätzliche Vorteile haben, ist aber für die Reduzierung des Nutruckens ohne wesentliche Bedeutung.

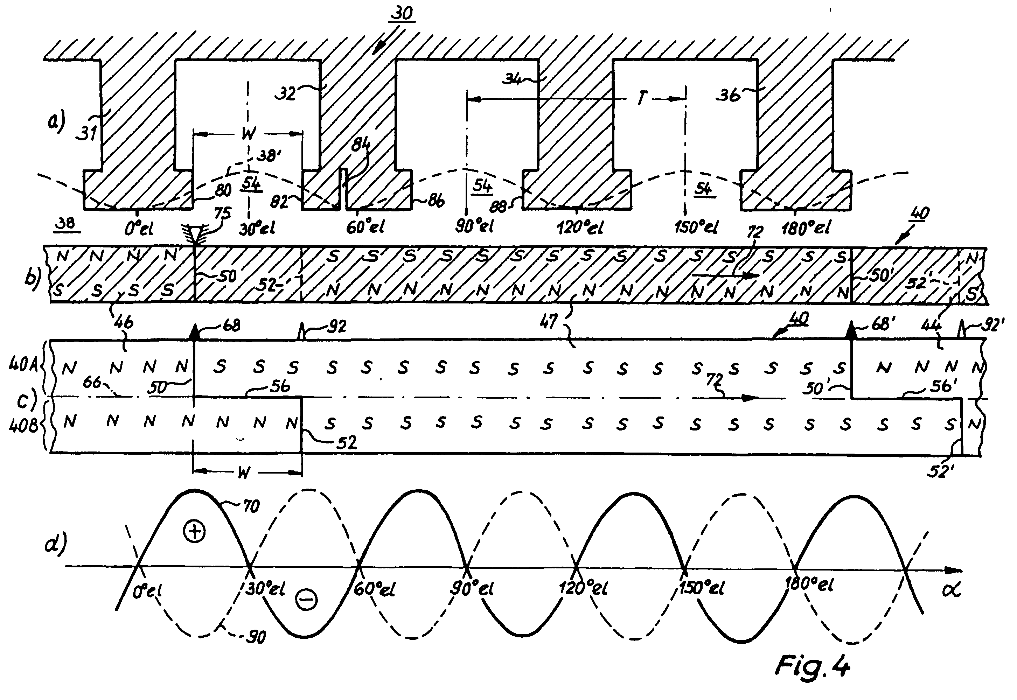

Fig. 4 dient zur Erläuterung der Erfindung. Diese zeigt einen Teil des Motors in Abwicklung, nämlich in Fig. 4a den Stator 30 mit den vier Zähnen 31, 32, 34, 36, und darunter in Fig. 4b den Rotormagneten 40 in Seitenansicht, und in Fig. 4c den Rotormagneten in der Draufsicht, also auf seiner dem Luftspalt 38 zugewandten Seite. Fig. 4d zeigt die sogenannten Reluktanzmomente, welche entstehen, wenn der Rotor 40 gedreht wird, z.B. manuell oder durch eine Maschine, oder im Betrieb des Motors.

Die Polgrenzen gemäß Fig. 4c entsprechen dem linken Muster der Fig. 3, also mit den Polgrenzen 50, 52, 56, und deshalb sind in Fig. 4c, rechts, die Polgrenzen mit 50', 52' und 56' bezeichnet. Anhand dieser Form der Polgrenzen ist die Funktion leichter zu erklären und zu verstehen. Diese Form der Polgrenzen wird also aus didaktischen Gründen hier dargestellt, obwohl sie an sich eine unerwünschte axiale Kraft auf den Rotor zur Folge hat.

Für die Erläuterung ist es nützlich, sich den Rotor 40 längs einer Längsachse 66 (Fig. 4c) in zwei separate Rotorhälften unterteilt zu denken, welche auf verschiedene Weise mit dem Stator 30 in Interaktion treten. Die in Fig. 4c obere Rotorhälfte ist deshalb mit 40A bezeichnet, die untere mit 40B.

Zunächst zur oberen Rotorhälfte 40A. Deren Polgrenzen 50, 50' sind durch schwarze Dreiecke 68, 68' visuell markiert.

Steht der Rotor 40 so, daß das schwarze Dreieck 68 der Stellung 0° el. (Fig. 4a), 30° el., 60° el., 90° el. etc. des Stators 30 gegenüberliegt, so wirkt in dieser Stellung kein Reluktanzmoment auf den Rotormagneten 40A, da dieser symmetrisch zum Stator 30 steht und deshalb genau dieselben magnetischen Kräfte in Vorwärtsrichtung wie in Rückwärtsrichtung auf ihn wirken, wenn er sich in diesen Stellungen befindet. Deshalb hat in diesen Stellungen 0° el., 30° el. etc. das Reluktanzmoment 70, das in Fig. 4d dargestellt ist und auf die Rotorhälfte 40A wirkt, den Wert Null, wie sich das aus der Symmetrie der Anordnung direkt und anschaulich ergibt.

Dreht man die Rotorhälfte 40A in der mit 72 bezeichneten Drehrichtung, z.B. von 0° el. in die in Fig. 4 dargestellte Stellung (15° el.), so wirkt ein antreibender, also positiver Teil des Reluktanzmoments 70 auf die Rotorhälfte 40A, und dieses Reluktanzmoment hat etwa die in Fig. 4d dargestellte Form. Man kann sich das - als Eselsbrücke - so vorstellen, daß die Polgrenze 50 bestrebt ist, in die Stellung 30° el. (oder 90° el., oder 150° el. etc.) zu laufen, in welcher der Luftspalt 38, welcher ihr gegenüberliegt, am größten ist.

Dabei ist es, rein zur besseren Veranschaulichung, nützlich, sich an der Polgrenze 50 ein myopisches Auge 75 (Fig. 4b) vorzustellen. In der dargestellten Stellung (15° el.) "sieht" dieses Auge 75 links das Eisen des Zahns 31, und rechts sieht es die Nutöffnung 54, also Luft. Für dieses gedachte Auge 75 "verschwimmt" Eisen und Luft zu einer Art "verdünntem Eisen", oder anders gesagt, statt des tatsächlichen Luftspalts 38 sieht dieses myopische Auge 75 einen "magnetisch wirksamen Luftspalt" 38', der in Fig. 4a mit einer gestrichelten Linie angedeutet ist. Und dieser magnetisch wirksame Luftspalt 38' bestimmt die Form des Reluktanzmoments 70 für die obere Rotorhälfte 40A.

Wird die obere Rotorhälfte 40A nun über die Stellung 30° el. hinaus weitergedreht, so verläßt das schwarze Dreieck 68 das Maximum des magnetisch wirksamen Luftspalts 38', d.h. dieser wird wieder kleiner, und das bedeutet, daß die Rotorhälfte 40A durch ein negatives Reluktanzmoment gebremst wird, wie das in Fig. 4d für die Kurve 70 dargestellt ist.

Man erkennt auch, daß das (positive bzw. negative) Maximum des Reluktanzmoments 70 immer etwa mit der Seitenkante einer Nutöffnung 54 zusammenfällt, d.h. für den Betrachter hat es den Anschein, daß diese Kanten das "Nutrucken" bewirken.

Diese Seitenkanten bewirken eine starke Diskontinuität des (tatsächlichen) Luftspaltverlaufs 38, und zwar wird beispielsweise, bezogen auf die Drehrichtung 72, an der rechten Kante 80 des Zahns 31 der Luftspalt 38 plötzlich sehr viel größer, weshalb diese Art von Diskontinuität hier als "positive Diskontinuität" bezeichnet wird. Umgekehrt wird an der linken Kante 82 des Zahns 32 der Luftspalt 38 plötzlich sehr viel kleiner, weshalb diese Art von Diskontinuität als "negative Diskontinuität" bezeichnet wird.

Damit diese Diskontinuitäten einen Einfluß auf das Reluktanzmoment 70 haben, also für dieses relevant sind, müssen sie einen bestimmten Abstand voneinander haben. Z.B. ist im Zahn 32 ein schmaler Schlitz 84 dargestellt (nur aus didaktischen Gründen). Dieser Schlitz 84 stellt zwar auch eine positive und eine negative Diskontinuität des Luftspalts 38 dar, ist aber praktisch ohne Einfluß auf das Reluktanzmoment 70. Man kann sich das so vorstellen, daß das myopische Auge 75 diesen schmalen Schlitz 84 überhaupt nicht bemerkt, weil er so schmal ist. Deshalb ist er für das Reluktanzmoment nicht relevant.

Die nächste magnetisch relevante Diskontinuität bei Fig. 4 ist die rechte Kante 86 des Zahns 32, anschließend die linke Kante 88 des Zahns 34, etc.

Bei diesem Ausführungsbeispiel hat die Diskontinuitätendistanz DD von der positiven Diskontinuität 80 zur negativen Diskontinuität 82 den Wert W, ebenso die DD von der negativen Diskontinuität 82 zur nächsten positiven Diskontinuität 86, da eine Nutteilung T bei diesem Ausführungsbeispiel den Wert 2W hat. In diesem Fall werden die Polgrenzen 50 und 52 etwa um den Wert W gegeneinander versetzt, wie in Fig. 4c dargestellt, also um die kleinste DD.

Dies hat zur Folge, daß die untere Hälfte 40B des Rotors 40 ein Reluktanzmoment erzeugt, das zum Reluktanzmoment 70 in Phasenopposition verläuft, aber - wegen der Symmetrie der Anordnung - praktisch dieselbe Form wie das Reluktanzmoment 70 hat, so daß sich die Reluktanzmomente 70 und 90 gegenseitig aufheben. In der Praxis kann auf diese Weise das Nutrukken ganz weitgehend beseitigt bzw. ausgelöscht werden.

In Fig. 4c sind an den Polgrenzen 52, 52' offene Dreiecke 92 bzw. 92' dargestellt, und man erkennt, daß deren Symmetriestellungen bezüglich des Stators 30, also 0° el., 30° el. etc. mit den Symmetriestellungen der schwarzen Dreiecke 68, 68' zusammenfallen, da z. B. die Dreiecke 68 und 92 einen Abstand von 30° el. voneinander haben, welcher dem Abstand zweier Symmetriestellungen entspricht. Daraus ergibt sich die Phasenopposition der Kurven 70 und 90.

Die Ausführungsform nach den Fig. 2 bis 4 ist - wegen der beträchtlichen Größe der Nutöffnungen 54 - nicht sehr praktisch, d.h. ein solcher Motor hätte einen zu großen Luftspalt und folglich einen schlechten Wirkungsgrad. Sie wurde hauptsächlich dargestellt, um die Erfindung an einer relativ einfachen Variante erläutern zu können. Die nachfolgenden Ausführungsbeispiele ermöglichen kleinere Nutöffnungen, wie das den praktischen Anforderungen des Elektromaschinenbaus besser entspricht, beruhen aber auf ähnlichen Überlegungen, wie sie vorstehend anhand der Fig. 2 bis 4 sehr ausführlich erläutert wurden, um das Verständnis der Erfindung zu erleichtern.

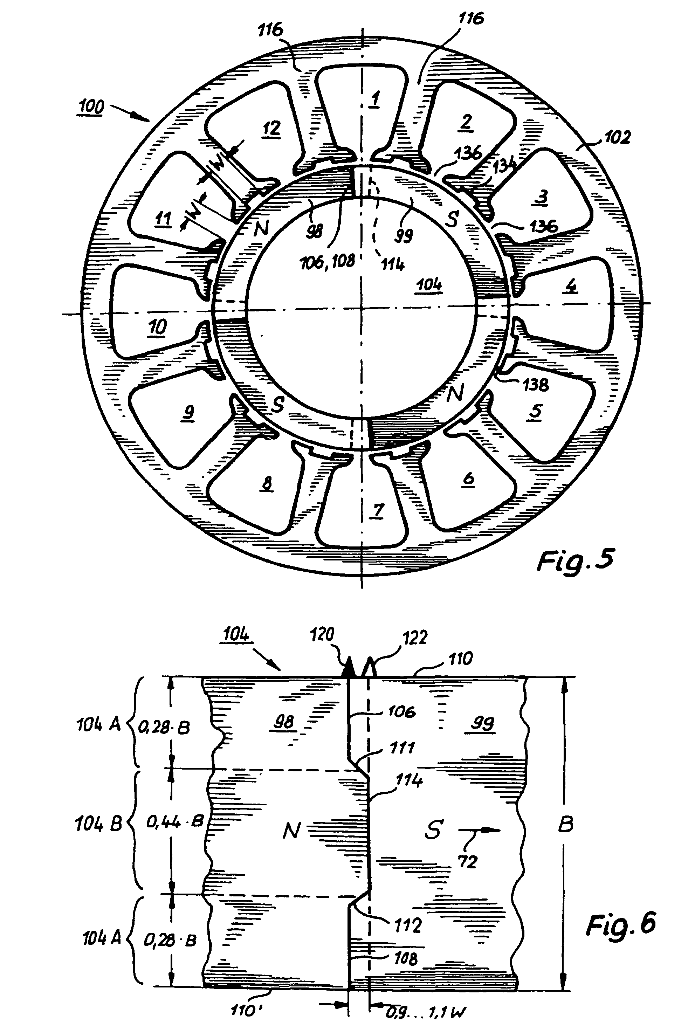

Die Fig. 5 bis 15 betreffen eine zweite, bevorzugte Ausführungsform der Erfindung. Auch bei diesem Motor 100, einem elektronisch kommutierten Innenläufermotor, hat der Stator 102 zwölf Nuten, die mit 1 bis 12 bezeichnet sind, und der Rotor 104 ist vierpolig und im wesentlichen gleich aufgebaut, wie anhand der Fig. 1 bis 4 bereits für den Rotor 40 ausführlich beschrieben.

Fig. 6 zeigt die Form einer Polgrenze zwischen zwei benachbarten Rotorpolen 98, 99. Diese Polgrenze hat zwei Abschnitte 106, 108, welche miteinander fluchten und sich von den Außenrändern 110, 110' des Rotormagneten 104 senkrecht nach innen erstrecken, also parallel zu den Nuten 1 bis 12 des Stators 102. Über schräg verlaufende Verbindungsstrecken 111 bzw. 112 gehen diese über in einen Mittelabschnitt 114 der Polgrenze, der um den Betrag 0,9...1, 1W gegenüber den Abschnitten 106, 108 parallel versetzt ist. Wegen der höheren Magnetflußdichte im Mittelbereich des Rotors 104 hat der Mittelabschnitt 114 nur eine Länge von 44 % der Rotorbreite B, und die Abschnitte 106, 108 haben also zusammen eine Länge von ca. 56 % der Rotorbreite B, damit ihre Wirkung der des mittleren Abschnitts 114 etwa entspricht. Das genaue Verhältnis, das hier 56 zu 44 beträgt, muß in der Praxis durch Versuche ermittelt werden.

Völlig analog zu Fig. 4c kann man sich den Rotormagneten 104 zerlegt denken in zwei Magnete:

- einmal die beiden äußeren Abschnitte 104A, zu einem einzigen Rotormagneten 104A zusammengefaßt, wobei derenPolgrenzen 106, 108 miteinander fluchten, also auf einer Linie liegen;
- zum anderen den mittleren Abschnitt 104B mit seiner versetzten Polgrenze 114.

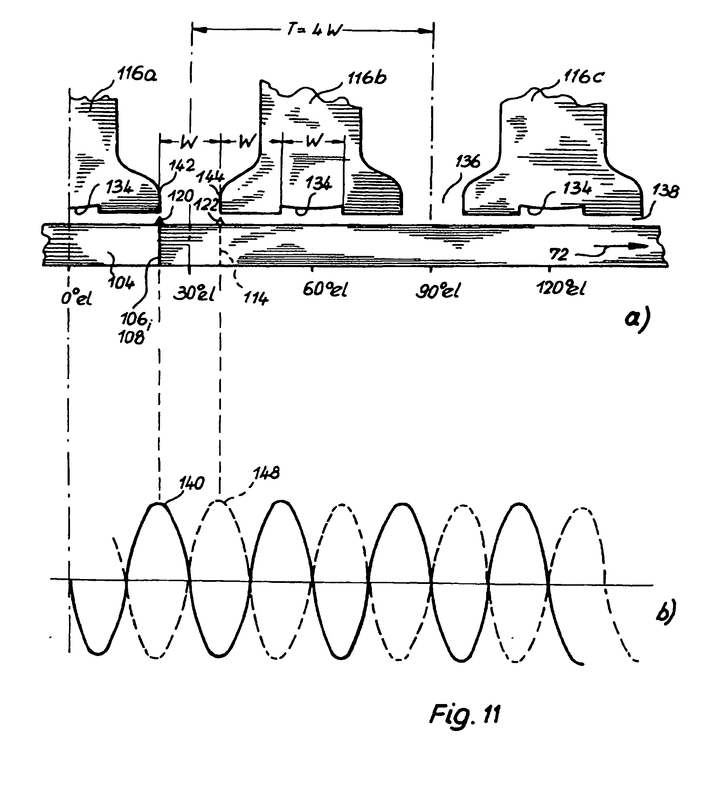

Die Polgrenzen 106, 108 sind in den Fig. 6 und 11 markiert durch ein schwarzes Dreieck 120, und die Polgrenze 114 ist markiert durch ein offenes Dreieck 122. Bei diesem Ausführungsbeispiel beträgt der Abstand zwischen den Dreiecken 120, 122, wie bereits erläutert, 0,9...1,1W, wobei W die Breite einer Nutöffnung ist und ca. 15° el. entspricht, vgl. die Fig. 6 und 11A.

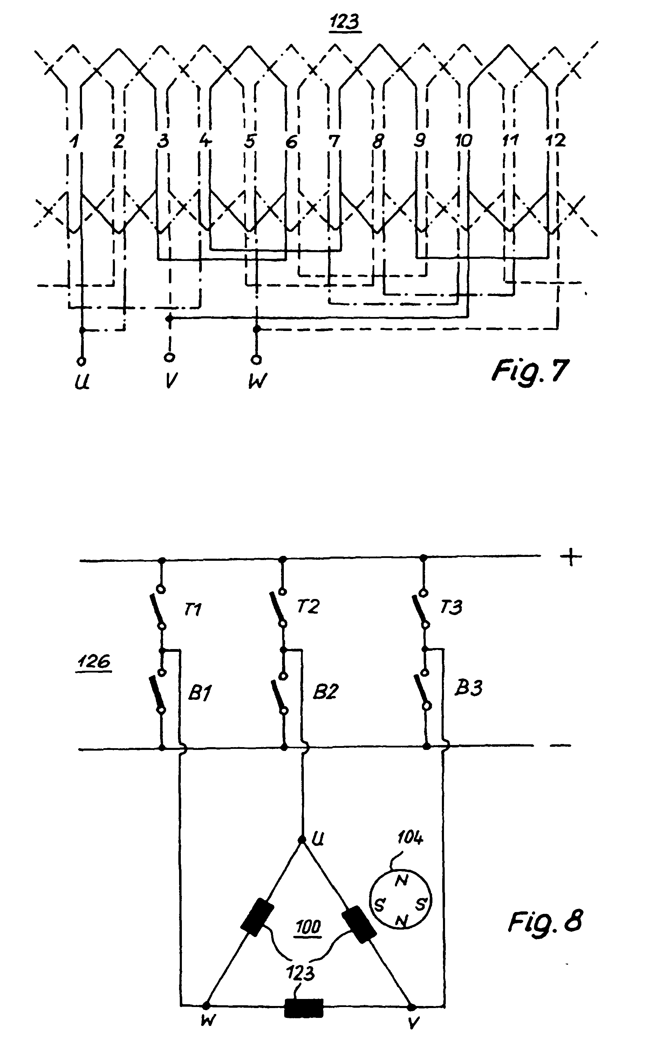

Fig. 7 zeigt eine dreisträngige Wicklung 123 für den Stator 102, welche im Dreieck geschaltet ist. Die Anschlüsse der Dreieckschaltung sind in der üblichen Weise mit U, V und W bezeichnet. Die Darstellung der Wicklung in den Nuten 1 bis 12 erfolgt in der im Elektromaschinenbau üblichen Weise. Wie man erkennt, erstrecken sich die Spulen der einzelnen Stränge nur über 120° el., d.h. die Wicklung 123 ist stark gesehnt. Dies ist bei einer Dreieckschaltung vorteilhaft, um die dritte Oberwelle (3. Harmonische) der induzierten Spannung bei dieser Art von Magnetisierung zu unterdrücken. (Eine gesehnte Wicklung hat eine Spulenweite - hier 120° el. -, die kleiner ist als eine Polteilung, also kleiner ist als 180° el.).

Statt einer Dreieckschaltung wäre selbstverständlich auch eine Sternschaltung möglich. Auch kann die Erfindung in gleicher Weise für andere Strangzahlen bzw. Phasenzahlen verwendet werden, wie sich aus der vorstehenden Beschreibung klar ergibt.

Fig. 8 zeigt die Verbindung der Wicklungsanschlüsse U, V, W mit einer Vollbrückenschaltung 126, deren sechs Halbleiterschalter T1, T2, T3, B1, B2, B3 nur symbolisch dargestellt sind. Diese werden abhängig von der Drehstellung des Rotors 104 aus- und eingeschaltet.

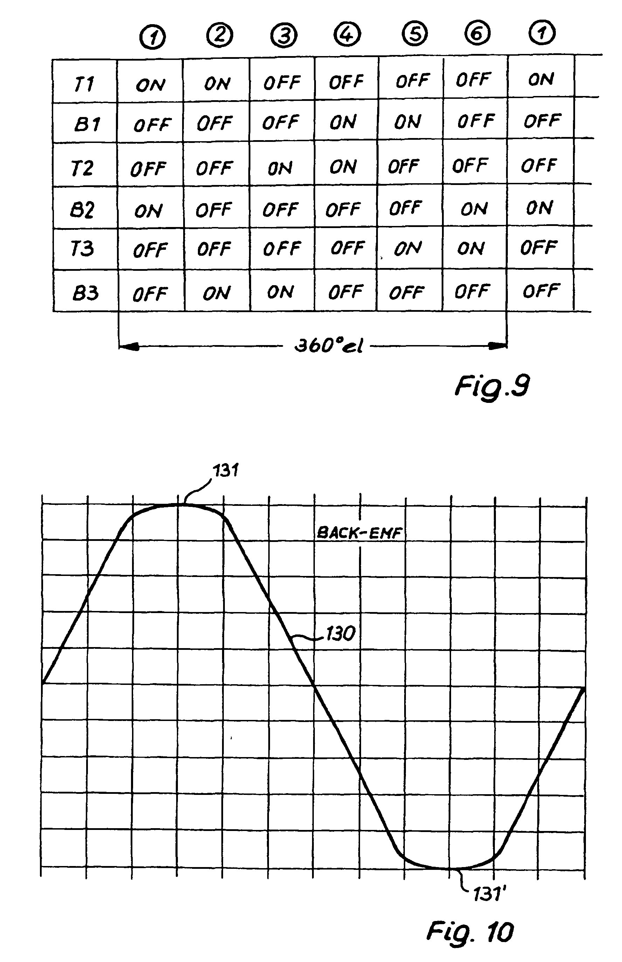

Fig. 9 zeigt beispielhaft in Form einer Tabelle die Kommutierungsfolge für einen Drehwinkel von 360° el. und eine vorgegebene Drehrichtung, wobei ON bedeutet, daß der betreffende Schalter geschlossen ist, und OFF, daß er geöffnet ist. Jeweils nach einer Drehung des Rotors 104 um 30° el. wird bei diesem Beispiel die Kommutierung weitergeschaltet. Zur Steuerung der Kommutierung können drei (nicht dargestellte) Hallgeneratoren dienen, oder die Rotorstellung kann über das sogenannte Sensorless-Prinzip (vgl. EP 0 536 113 B1) ermittelt werden. Diese Einzelheiten sind nicht dargestellt, da sie für das Verständnis der Erfindung keine Bedeutung haben und dem Fachmann geläufig sind.

**Fig. 10** zeigt bei 130 die Spannung zwischen den Punkten U und V (Fig. 7 oder 8), die man erhält, wenn man den Rotor 104 mechanisch antreibt, also als Generator betreibt. Man bezeichnet diese Spannung, welche im Motorbetrieb ebenfalls auftritt, als Back-EMF bzw. Gegen-EMK, oder auch als induzierte Spannung. Man erkennt, daß diese Spannung 130 etwa Trapezform hat, entsprechend der trapezförmigen Magnetisierung des Rotors 104. Durch die hier verwendeten Hilfsnuten 134 ergibt sich eine Spannungsform, die etwas mehr der Sinusform angenähert ist und oben bzw. unten einen Höcker 131, 131' hat. Da die Wicklung 123, wie bereits erläutert, stark gesehnt ist, ist die induzierte Spannung hier kein perfektes Abbild der Magnetisierung des Rotors, denn durch diese Art der Wicklung sollen ja bestimmte Oberwellen in der Spannung 130 unterdrückt werden. Eine Durchmesserwicklung (full-pitch winding) würde die Form der Magnetisierung des Rotors 104 besser abbilden, d.h. die Flanken der Spannung 130 wären dann steiler.

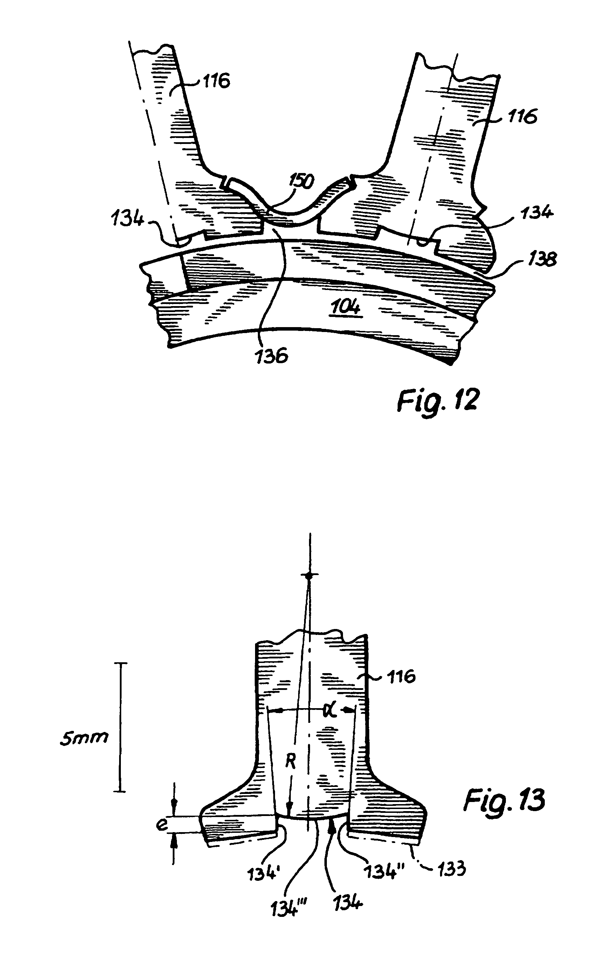

Die Zähne 116 des Stators 102 haben jeweils in ihrer Mitte eine sehr flache Hilfsnut 134, welche etwa dieselbe Breite W hat wie die Nutöffnungen 136, vgl. die Fig. 5 und 13. Die Nutteilung T (Fig. 11a) der für die Wicklung vorgesehenen Hauptnuten 1 bis 12 hat hier die Größe 4W bzw. 720° el.: 12 = 60° el., und die Nutöffnungen 136 sind hier wesentlich schmaler als beim ersten Ausführungsbeispiel, nämlich nur 15° el..

Betrachtet man die Gesamtheit der zwölf für die Wicklung vorgesehenen Nuten 1 bis 12 und der zwölf Hilfsnuten 134, so erhält man insgesamt 24 Nuten, die gleichmäßig am Statorumfang verteilt sind, die Form des Luftspalts bestimmen, und deren Nutteilung 720° el. : 24 = 30° el. beträgt. Wie man erkennt, beträgt die Versetzung der Polgrenzen 106, 108 (Fig. 6) zur Polgrenze 114 die Hälfte dieser 30° el., nämlich etwa 15° el. Beim ersten Ausführungsbeispiel betrug die Versetzung der dortigen, mit 50, 52 bezeichneten Polgrenzen etwa 30° el., nämlich die Hälfte der dortigen Nutteilung von 60° el. Ein bevorzugter Wert für die Versetzung der Polgrenzen ist also die Hälfte einer Nutteilung, wobei, falls vorhanden, die Hilfsnuten 134 in die Rechnung einzubeziehen sind. Bei diesem Wert der Versetzung ergeben sich zwei gegenphasige Reluktanzmomente, die sich bei richtiger Auslegung weitgehend gegenseitig auslöschen und dadurch das Nutrucken unterdrücken oder zumindest stark reduzieren.

Nachfolgend wird an einem Ausführungsbeispiel auch beschrieben werden, wie mit Hilfe von drei versetzten Polgrenzen, die jeweils um ein Drittel einer Nutteilung gegeneinander versetzt sind, ebenfalls eine Unterdrückung des Nutruckens erreicht werden kann.

Wie sich aus **Fig. 13** ergibt, wo zum Vergleich eine Länge von 5 mm angegeben ist, haben die Hilfsnuten 134 eine Winkelerstreckung $\alpha$, die beim Ausführungsbeispiel 15,2° el. beträgt, entsprechend einer Breite von ca. 2 mm. Die Tiefe e einer solchen Hilfsnut 134 beträgt z.B. 0,55 mm an ihrer linken Flanke 134', ebenso an ihrer rechten Flanke 134'', d.h. diese Hilfsnuten 134 sind sehr flach. Zwischen diesen Flanken nimmt die Tiefe ab, d.h. die Verbindung 134''' zwischen den Flanken hat die Form eines konvexen Kreisbogens, hier z.B. mit einem Radius R von 8 mm. Der Querschnitt ist also etwa linsenförmig, d.h. er erstreckt sich konvex zum Luftspalt hin. Dies hat u.a. den Vorteil, daß diese Hilfsnuten 134 den Mittelwert des Luftspalts 134 nicht wesentlich erhöhen, was für die Leistung und den Wirkungsgrad des Motors günstig ist.

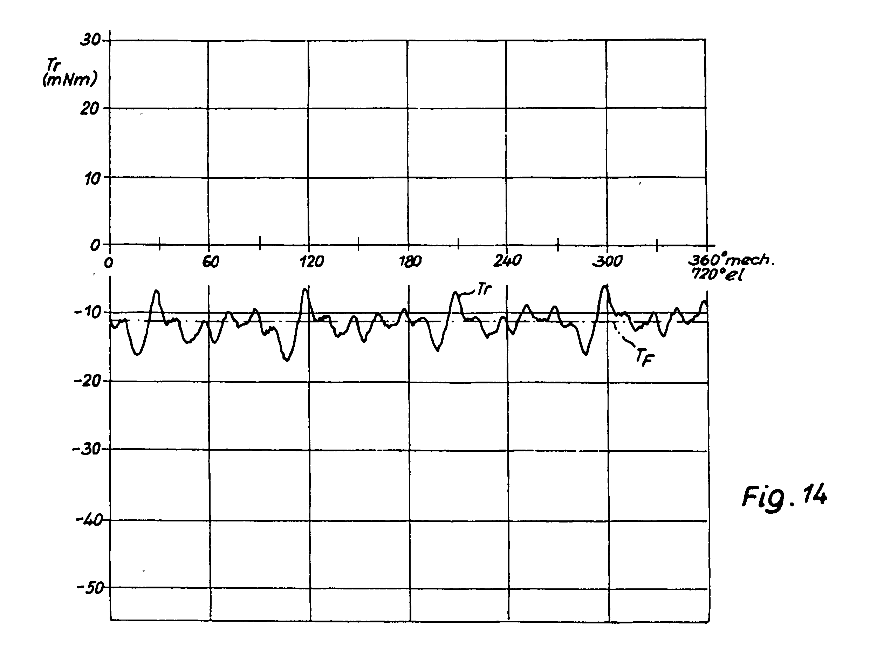

Fig. 13 zeigt auch, wie man den Motor optimieren kann. Hierzu haben die Statorbleche mit ihren Zähnen 116 zunächst einen zu kleinen Innendurchmesser, der durch die strichpunktierte Linie 133 angedeutet ist. Mit diesen - zu großen - Statorblechen, bei denen also die Hilfsnut 134 zu tief ist, was zu einem entsprechend großen Reluktanzmoment führt, wird das Reluktanzmoment des Motors gemessen, wie es in Fig. 14 beispielhaft dargestellt ist.

Fig. 14 zeigt den Verlauf dieses Moments über einer vollen Rotorumdrehung von 360° mech. bzw. 720° el. Die Messung erfaßt hierbei auch das Reibungsmoment $T_F$ des Motors, das hier z.B. im Durchschnitt 11,4 mNm beträgt und sich dem Reluktanzmoment überlagert, so daß sich das gemessene Moment $T_r$ ergibt, dessen alternierende Komponente (Wechselanteil) etwa im Bereich $\pm 5$ mNm schwankt, also im optimierten Zustand sehr klein ist.

Nach dieser Messung wird der Innendurchmesser des Statorblechpakets 102 (Fig. 5) dadurch vergrößert, daß man dieses ausschleift oder auf einer Drehbank ausdreht. Dadurch wird die Tiefe der Hilfsnuten 134 kleiner, ebenso das durch diese erzeugte Reluktanzmoment. Mit diesem geänderten Statorblechpaket 102 (entsprechend der durchgehenden Linie in Fig. 13) wird die Kurve gemäß Fig. 14 erneut gemessen, und man schaut, ob sich das Resultat verbessert hat. Auf diese Weise kann man im Labor den Motor sehr einfach optimieren. d.h. die optimale Tiefe e der Hilfsnuten 134 feststellen, und diese optimale Tiefe e wird dann für die Herstellung des Motors verwendet.

Fig. 14 ist bei einem solchen optimierten Motor gemessen, und Fig. 13 zeigt einen Zahn 116 dieses optimierten Motors, wobei hier e = 0,55 mm, R = 8 mm, und $\alpha$ = 15,2° el. ist.

Die Wirkungsweise des zweiten Ausführungsbeispiels erschließt sich am besten aus Fig. 11. Betrachtet man dort den schwarzen Pfeil 120, welcher die Rotorhälfte 104A symbolisiert, so erkennt man, daß dieser in den Stellungen 0° el., 30° el., 60° el. etc. Symmetriestellungen hat, d.h. in diesen Stellungen hat das Reluktanzmoment 140, das auf die Rotorhälfte 104A einwirkt, den Wert 0.

Eine ähnliche Symmetriestellung für die Rotorhälfte 104A ergibt sich bei etwa 15° el., 45° el., 75° el, 105° el. etc., d.h. auch dort hat das Reluktanzmoment 140 den Wert 0.

Dreht man die Rotorhälfte 104A in Richtung des Pfeiles 72 so, daß sich das schwarze Dreieck 120 von 0° el. nach 15° el. bewegt, so ist hierzu ein antreibendes Drehmoment erforderlich, d.h. das Reluktanzmoment ist hier negativ, weil der magnetisch wirksame Luftspalt im Bereich der Polgrenzen abnimmt. Dreht man weiter von 15° el. nach 30° el., so erhält man - durch die Zunahme des magnetisch wirksamen Luftspalts - ein antreibendes Reluktanzmoment dort, wo die Polgrenzen 106, 108 über die rechte Kante 142 des Zahns 116a hinweglaufen, welche dort eine positive Diskontinuität bildet.

Dreht man die Rotorhälfte 104A von der Stellung 30° el. zur Stellung 45° el., so muß ein bremsendes Reluktanzmoment 140 überwunden werden, dessen Maximum etwa mit der linken Kante 144 des Zahns 116b zusammenfällt, welche hier eine negative Diskontinuität bildet. Der weitere Verlauf ergibt sich aus Fig. 11b.

Die Rotorhälfte 104B (Fig. 6) ist symbolisiert durch das offene Dreieck 122, das relativ zum schwarzen Dreieck 120 um etwa 15° el. versetzt ist, d.h. die Rotorhälfte 104B erzeugt ein um diesen Winkel versetztes Reluktanzmoment 148, das in Fig. 11b mit einer gestrichelten Linie dargestellt ist. Die Form des Reluktanzmoments 148 ist im übrigen identisch mit der Form des Reluktanzmoments 140, was sich aus der Geometrie des Motors sofort ergibt.

Wie man aus Fig. 11b erkennt, sind die Reluktanzmomente 140, 148 etwa in Phasenopposition, wodurch sie sich im wesentlichen gegenseitig aufheben. Durch eine richtige Formgebung der Hilfsnuten 134 läßt sich eine sehr starke Reduzierung des Nutruckens erreichen, wie das weiter oben bereits beschrieben wurde.

Gemäß **Fig. 12** ist eine weitere Verbesserung dadurch möglich, daß man im Bereich der Nutöffnungen 136, also der Öffnungen der Hauptnuten 1 bis 12, jeweils einen Nutverschluß 150 aus ferromagnetischem Material vorsieht. Hierdurch wird der Luftspalt 138 im Bereich der Nutöffnungen 136 verkleinert, so daß der Aufbau des Stators symmetrischer wird. Man kann solche Nutverschlüsse 150 auch nur an einem Teil der Nutöffnungen 136 vorsehen, z.B. nur an jeder zweiten Nutöffnung. In der Praxis hat es sich jedoch gezeigt, daß bei richtiger Auslegung der Hilfsnuten 134 solche Nutverschlüsse 150 nicht erforderlich sind.

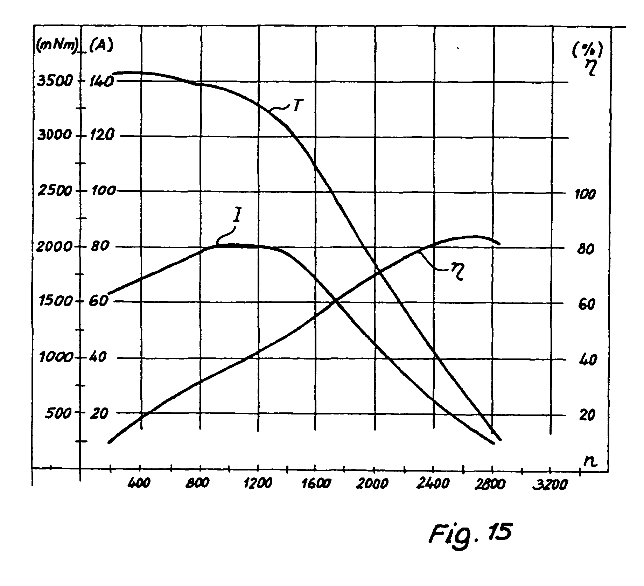

**Fig. 15** zeigt die Meßwerte eines Motors, der gemäß Fig. 5 bis 14 aufgebaut ist. Als Rotormagnete 98, 99 wurden Neodymmagnete mit einer magnetischen Remanenz von etwa 1T verwendet, die gemäß Fig. 1 trapezförmig magnetisiert sind, wobei die Polgrenzen 106, 108, 114 gemäß Fig. 6 verlaufen. Das maximale Drehmoment T eines solchen Motors beträgt 3,5 Nm, und die Schwankungen durch das Reluktanzmoment $T_r$ gemäß Fig. 15 betragen nur ± 0,005 Nm, also 0,15 % hiervon. Dieser Wert stört in der Praxis nicht.

Im Leerlauf hat dieser Motor eine Drehzahl von 2861 n bei einem Strom von 1,36 A (Betriebsspannung: 12 V). Bei Belastung sinkt die Drehzahl auf 2723 n bei einem Strom von 12,9 A, einem Drehmoment von 0,49 Nm, einer aufgenommenen Leistung von 163,7 W und einer abgegebenen Leistung von 139,4 W, also einem Wirkungsgrad von 85,1 %. Wichtig ist, daß das erzeugte Drehmoment dieses Motors außerordentlich gleichförmig ist, obwohl ein genuteter Stator verwendet wird und obwohl beim Rotor eine trapezförmige Magnetisierung mit scharfen Polgrenzen Verwendung findet.

**Fig. 16** zeigt ein drittes Ausführungsbeispiel der Erfindung. Dieses stimmt weitgehend mit den vorhergehenden Ausführungsbeispielen überein, weshalb für gleiche oder gleichwirkende Teile dieselben Bezugszeichen verwendet und diese Teile nicht nochmals beschrieben werden.

Der Stator 102' hat hier ebenfalls zwölf Hauptnuten, die mit 1 bis 12 bezeichnet sind und zur Unterbringung der Wicklung dienen, welche gleich aufgebaut sein kann wie die in Fig. 7 dargestellte Wicklung 123.

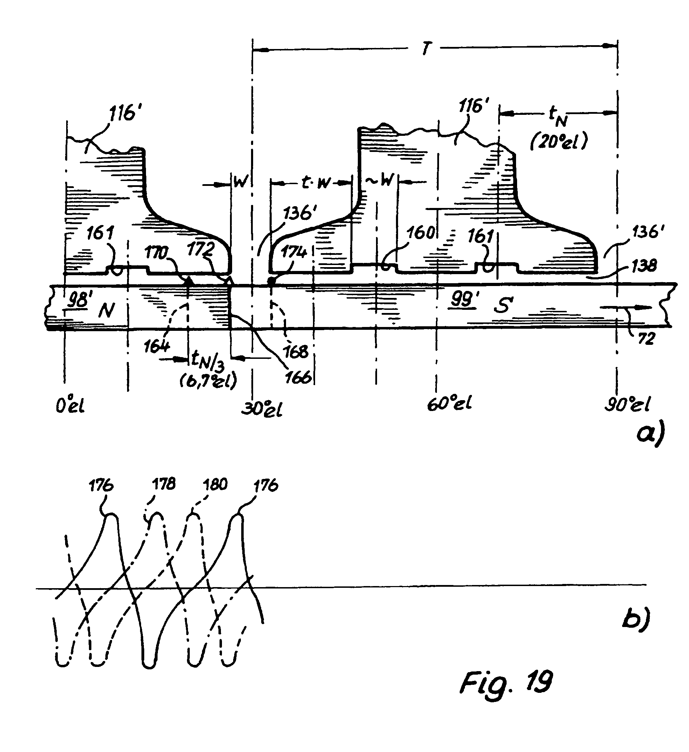

Abweichend von den vorherigen Ausführungsbeispielen haben die Zähne 116' des Stators 102' hier jeweils zwei Hilfsnuten 160, 161 (Fig. 19a), die mit den Hauptnuten 136' zusammen gleichmäßig am Umfang des Stators verteilt sind. Insgesamt hat der Stator 102' also hier 36 Nuten, so daß sich eine Nutteilung $t_N$ von 720° : 36 = 20° el. ergibt. Die Breite der Hilfsnuten 160, 161 und der Hauptnuten 136' beträgt dabei etwa ein Drittel dieser Nutteilung, also nur etwa 6,7° el. Der Vorteil ist, daß hiermit sehr kleine Breiten der Öffnungen 136' der Hauptnuten 1 bis 12 möglich sind, d.h. der Luftspalt 138 hat einen weitgehend homogenen Verlauf.

Die Hilfsnuten 160, 161 können gleich aufgebaut sein, wie das bei Fig. 13 im einzelnen beschrieben wurde. Auch ihre Tiefe kann auf dieselbe Weise experimentell ermittelt werden.

Der Rotor 104' ist gleich magnetisiert, wie das in Fig. 1b dargestellt ist, also trapezförmig. Im Unterschied zu den vorhergehenden Ausführungsbeispielen sind aber hier drei relativ zueinander versetzte Polgrenzen 164, 166 und 168 vorgesehen, die jeweils etwa um die Breite W einer Nutöffnung 136' gegeneinander versetzt sind, also um ein Drittel einer Nutteilung $t_N$, d.h. hier um 6,7° el., vgl. Fig. 19a.

**Fig. 17** zeigt eine treppenförmige Anordnung der drei Polgrenzen 164, 166, 168, welche den Nachteil hat, daß auf den Rotor 104' ein magnetischer Zug in axialer Richtung wirken kann, wie bei Fig. 3, linker Teil, erläutert.

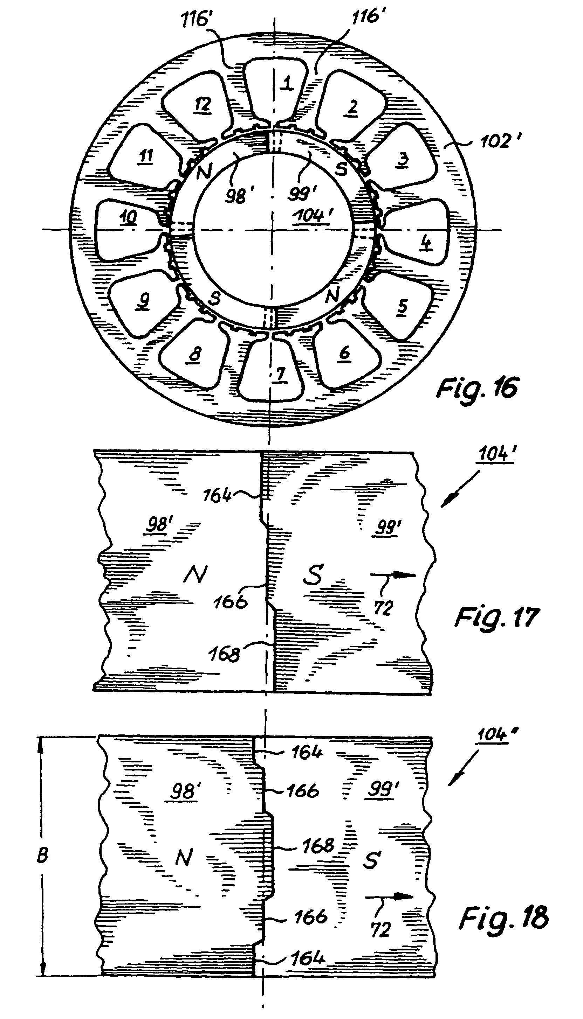

**Fig. 18** zeigt eine symmetrische Anordnung dieser drei Polgrenzen 164, 166, 168, wodurch eine etwa pfeilförmige Struktur entsteht, bei der solche axialen Kräfte nicht auftreten.

Soll die treppenförmige Anordnung der Polgrenzenabschnitte 164, 166, 168 in Fig. 18 ersetzt werden durch zwei (nicht dargestellte) geschrägte Polgrenzen, die zusammen eine pfeilartige Struktur bilden, so beträgt deren Schrägungswinkel hier etwa arc sin ($t_N$ : B/2),

wobei $t_N$ gleich Rotorumfang geteilt durch die Zahl aller Nuten ist, und B die Breite des Rotors 104", wie in Fig. 18 angegeben.

In analoger Weise kann für alle anderen Varianten der Schrägungswinkel errechnet werden, der z. B. in Fig. 17

arc sin ($t_N$ : B)

betragen würde. Jedoch scheint die dargestellte Version mit versetzten, zueinander parallelen Polgrenzenabschnitten wesentliche Vorteile gegenüber einer Version mit geschrägten Polgrenzen zu haben.

Der Umstand, daß hier die Polgrenzen nur um einen relativ kleinen Abstand gegeneinander versetzt sind, wirkt sich sehr vorteilhaft auf die Leistung des Motors aus, denn das Gebiet der versetzten Polgrenzen trägt praktisch nicht zum Drehmoment des Motors bei, und je schmaler dieses ist, um so höher ist die Leistung des Motors.

Zur Wirkungsweise wird auf **Fig. 19** Bezug genommen. Die Polgrenze 164 ist in Fig. 19a durch ein schwarzes Dreieck 170 symbolisiert, die Polgrenze 166 durch ein offenes Dreieck 172, und die Polgrenze 168 durch einen Punkt 174.

Ebenso wie in den vorhergehenden Figuren erkennt man, daß eine Symmetriestellung gegeben ist, wenn sich das schwarze Dreieck 170 in den Stellungen 0° el., 30° el., 60° el., 90° el. etc. befindet. An diesen Stellen hat also das durch die Polgrenze 164 erzeugte Reluktanzmoment, das mit 176 bezeichnet ist, eine Nullstelle. Ebenso hat es eine Nullstelle bei etwa 10° el., 20° el., 40° el., 50° el., 70° el., 80° el. etc. Der Verlauf ist in Fig. 18b eingetragen.

Die Form des Reluktanzmoments 176 weicht hier, wie dargestellt, erheblich von der Sinusform ab. Dies ist eine Folge davon, daß z.B. im Bereich von 14° el. bis 26° el. der Luftspalt 138 praktisch konstant ist, wodurch sich dort nur ein kleines Reluktanzmoment ergibt.

Da die Polgrenze 166 relativ zur Polgrenze 164 um 6,7° el. versetzt ist, hat das durch diese Polgrenze erzeugte Reluktanzmoment 178 die in Fig. 18b dargestellte Phasenlage relativ zum Reluktanzmoment 176, also um 6,7° el. nach rechts verschoben. Ebenso hat das durch die Polgrenze 168 hervorgerufene Reluktanzmoment 180 die in Fig. 18b dargestellte Phasenlage, d.h. nochmals um 6,7° el. nach rechts verschoben.

Bei Betrachtung von Fig. 19b erkennt man ohne weiteres, daß sich die drei Reluktanzmomente 176, 178 und 180 gegenseitig etwa aufheben. Hierauf beruht beim dritten Ausführungsbeispiel die Unterdrückung des Nutruckens, d.h. es werden drei Reluktanzmomente einander so überlagert, daß deren Summe etwa Null ergibt. Die Versetzung dieser drei Reluktanzmomente beträgt jeweils (im Bogenmaß) $2\pi/3$, analog einem Drehstromsystem.

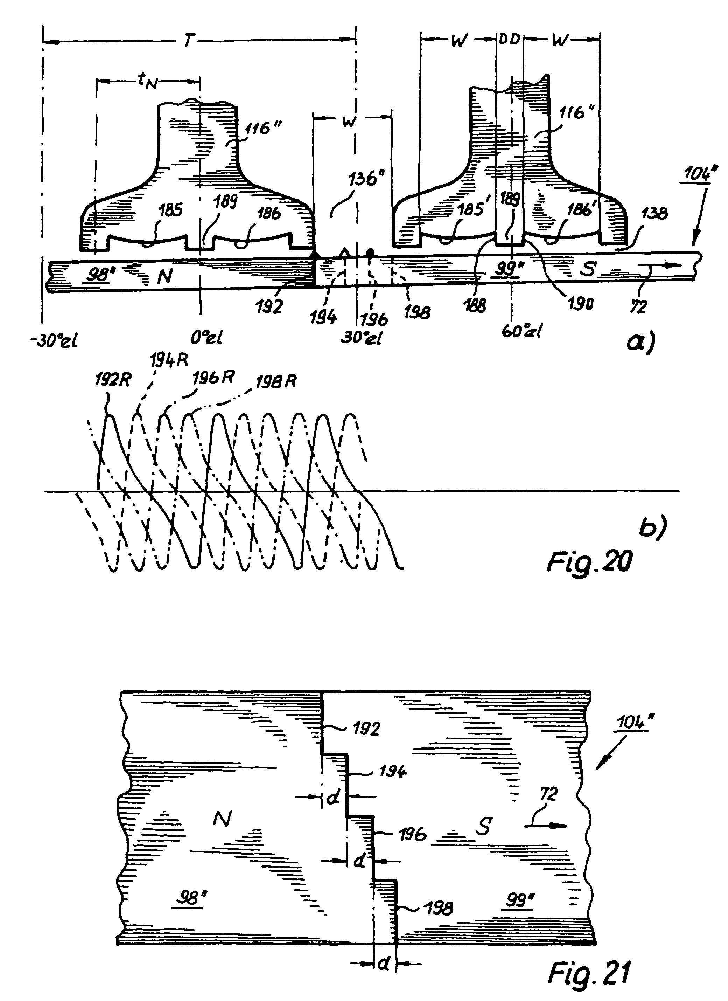

Die **Fig. 20 und 21** zeigen ein viertes Ausführungsbeispiel der Erfindung, in schematischer Darstellung analog Fig. 4, Fig. 11 oder Fig. 19. Die Statorzähne 116" sind hier ebenfalls jeweils mit zwei Hilfsnuten 185, 186 bzw. 185', 186' versehen, deren Breite der Breite W der Öffnung 136" einer Hauptnut entspricht. Diese Breite W ist größer als die Hälfte einer Nutteilung $t_N$, weshalb hier der Abstand d zwischen zwei versetzten Polgrenzenabschnitten etwa der kleinsten Diskontinuitätendistanz DD zwischen einer positiven Diskontinuität 188 und einer negativen Diskontinuität 190 (Fig. 20a) entspricht, d.h. hier wird die Versetzung d der Polgrenzen nicht bestimmt durch die Breite W einer Nutöffnung, sondern durch die Breite DD des Statoreisens 189 zwischen zwei Nutöffnungen, z.B. zwischen den Hilfsnuten 185' und 186'.

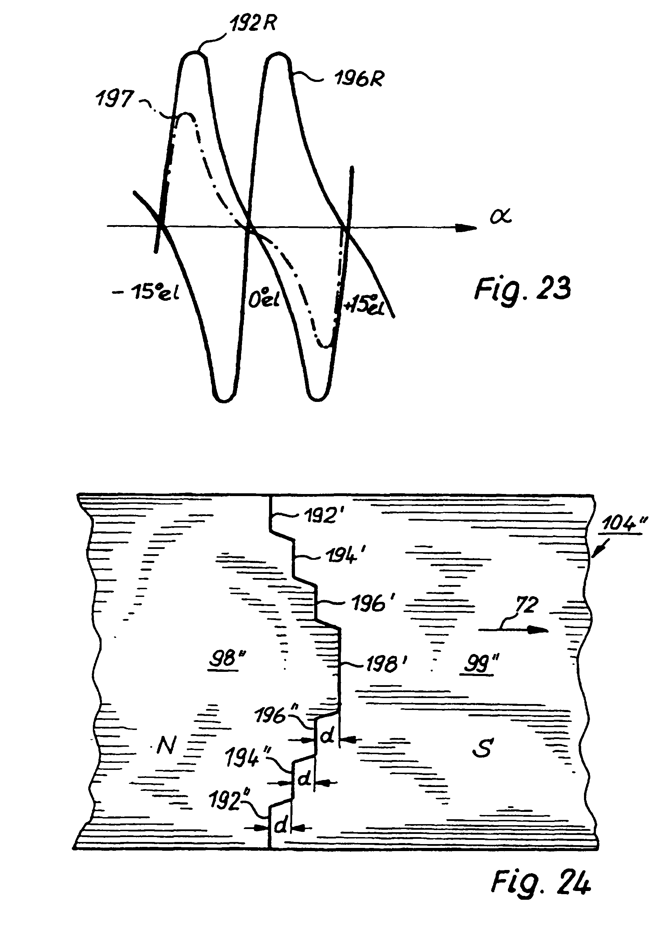

Der Rotor 104" hat hier vier gegeneinander versetzte Polgrenzenabschnitte 192, 194, 196 und 198, die gemäß Fig. 21 treppenförmig angeordnet sein können, oder auch, analog zu Fig. 18, etwa pfeilförmig, wie das in **Fig. 24** dargestellt ist. Diese treppenförmige Polgrenze trennt den dargestellten Nordpol 98" vom dargestellten Südpol 99", wobei der Abstand der versetzten Abschnitte jeweils d beträgt, entsprechend etwa der Größe DD.

In Fig. 24 schließen sich an den mittleren Polgrenzenabschnitt 198' symmetrisch zwei um den Abstand d versetzte Abschnitte 196', 196" an. An diese schließen sich symmetrisch zwei um den Abstand d versetzte Abschnitte 194', 194" an, und an diese nochmals zwei um den Abstand d versetzte symmetrische Abschnitte 192', 192". Es spielt keine Rolle, ob der "Pfeil" dieser pfeilförmigen Anordnung in Drehrichtung oder gegen die Drehrichtung zeigt, d.h. die Erfindung eignet sich in gleicher Weise für beide Drehrichtungen, was sich ja auch aus der Symmetrie der Anordnung direkt ergibt.

Hierdurch ergeben sich gemäß Fig. 20b insgesamt vier versetzte Reluktanzmomente. Da der Verlauf des Luftspalts 138 hier stark von der Sinusform abweicht, weicht auch die Form der Reluktanzmomente stark von der Sinusform ab, wie in Fig. 20b dargestellt.

In Fig. 20b ist das durch den Polgrenzenabschnitt 192 erzeugte Reluktanzmoment mit 192R bezeichnet. Es hat Nullpunkte bei -15° el., 0° el., 15° el., 30° el. etc. Sein positives Maximum liegt bei etwa -10° el., und sein negatives Maximum bei etwa +10° el.

Das durch den Abschnitt 194 erzeugte Reluktanzmoment ist in Fig. 20b mit 194R bezeichnet, und analog die Drehmomente 196R und 198R für die Abschnitte 196, 198 der Polgrenzen. Die Reluktanzmomente 194R etc. sind gegenüber dem Moment 192R jeweils um den Wert d = DD, 2d bzw. 3d versetzt, wobei d hier etwa 5° el. beträgt und gleich W/3 ist.

Wie **Fig. 23** zeigt, verlaufen die Momente 192R, 196R gegenphasig zueinander, löschen sich aber wegen ihrer unsymmetrischen Form gegenseitig nicht aus, d.h. bei ihrer Überlagerung entsteht ein nicht unbeträchtliches Nutrucken 197, vgl. Fig. 23. Verwendet man dagegen vier Reluktanzmomente, wie in Fig. 20 dargestellt, so wird das Nutrucken stärker unterdrückt, und das verbleibende Reluktanzmoment hat eine höhere Frequenz, so, als hätte der Stator etwa die vierfache Zahl von Nuten, also im vorliegenden Fall 144 Nuten. Ein solches restliches Drehmoment stört in der Praxis nur wenig.

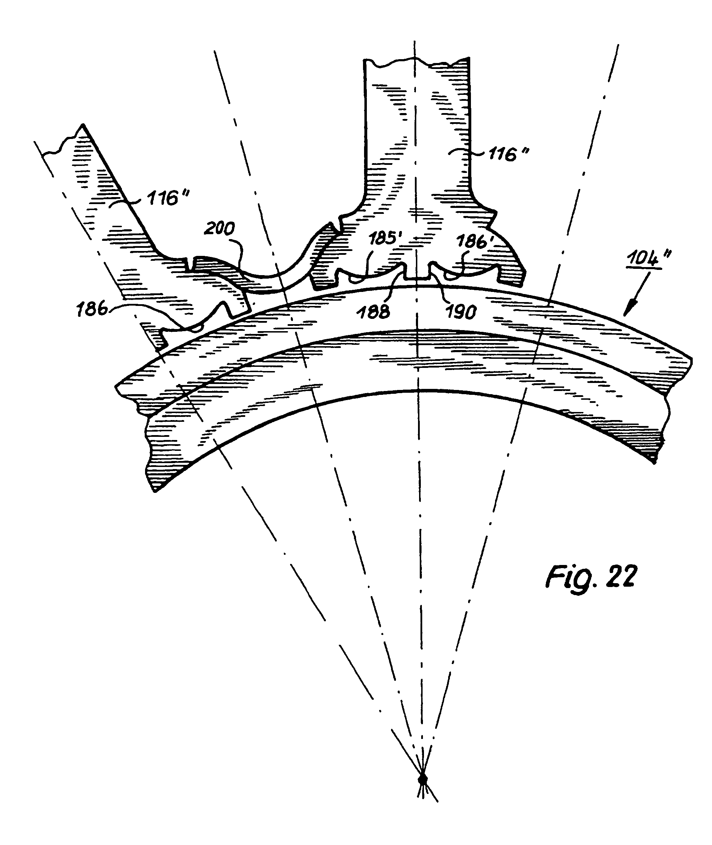

**Fig. 22** zeigt eine Variante analog Fig. 12 mit einem Nutverschluß 200 aus weichferromagnetischem Material. Ein solcher Nutverschluß wird zweckmäßig an allen Nutöffnungen angebracht und reduziert das Nutrucken ggf. noch weiter. Doch hat es sich gezeigt, daß die vorliegende Erfindung die Verwendung solcher Nutverschlüsse weitgehend überflüssig macht, was die Kosten der Herstellung eines solchen Motors erheblich reduziert.

Für den Fall, daß die Nutöffnungen eine Breite haben, die maximal der Hälfte einer Nutteilung entspricht, ergibt sich für die Größe W/T folgende Formel:

$$W/T = (1+t\,(h+1)+h)^{-1} \qquad (1)$$

wobei

h = Anzahl der Hilfsnuten pro Statorzahn

t = Anzahl der versetzten Polgrenzenabschnitte minus 1

Z.B. ist bei Fig. 3 der Wert t = 1, ebenso bei Fig. 6. Bei Fig. 17 und 18 ist t = 2.

Einige Werte für diese Alternativen:

| t | h | W/T | Bemerkung |
|---|---|-----|-----------|
| 1 | 0 | 0,5 | (vgl. Fig. 2) |
| 2 | 0 | 0,33 | |
| 1 | 1 | 0,25 | (vgl. Fig. 5) |
| 2 | 1 | 0,17 | |
| 1 | 2 | 0,17 | |
| 2 | 2 | 0,11 | (vgl. Fig. 16) |
| 3 | 0 | 0,25 | |
| 3 | 1 | 0,125 | |

**Statoren mit breiten Hilfsnuten**

Ist die Breite einer Nutöffnung größer als die Hälfte einer Nutteilung $t_N$, so muß für t in die obige Formel der Reziprokwert (Kehrwert) eingesetzt werden von (Zahl Q der versetzten Polgrenzenabschnitte - 1).

Z.B. sind in Fig. 21 oder 24 Q = 4 versetzte Polgrenzenabschnitte vorgesehen, weshalb Q-1=3 ist. Der Kehrwert hiervon, also

$$t=(Q-1)^{-1},$$

ist folglich 1/3, und damit ergibt sich bei h = 2 aus der Formel (1) eine Größe W/T = 0,25. Dies ergibt eine sehr günstige Lösung, da bei dem Motor nach Fig. 21 oder Fig. 22 der Verlust an nutzbarem Rotor-Magnetfluß (durch die versetzten Polgrenzen, wie eingangs beschrieben) besonders klein ist. Bei nur drei versetzten Polgrenzen, also Q = 3 bzw. t = 1/2, und zwei Hilfsnuten pro Statorzahn, also h = 2, ergibt sich analog für W/T die Größe 0,222 für eine optimale Löschung des Nutruckens.

Wählt man die Zahl h der Hilfsnuten pro Statorzahn entsprechend hoch, so kann immer ein Faktor t gewählt werden, der kleiner als 1 ist, so daß das Verhältnis W/T je nach den Bedürfnissen der Praxis in weiten Grenzen wählbar ist. Die Grenzen liegen in der tatsächlichen Herstellbarkeit der für den Stator benötigten Blechschnitte, bzw. der Herstellbarkeit der erforderlichen Magnetisierung des Rotors.

Naturgemäß sind im Rahmen der vorliegenden Erfindung über die beschriebenen Varianten hinaus vielfältige weitere Abwandlungen und Modifikationen möglich.

**Patentansprüche**

1.  Elektromotor, insbesondere elektronisch kommutierter Motor, mit einem genuteten Stator (30) und einem Rotor (40), welcher Rotorpole (44-47, 98, 99) aufweist, die eine trapez- oder rechteckförmige Magnetisierung aufweisen, wobei die Zahl der Statorzähne (31, 32, 34, 36, 116, 116' ,116") des genuteten Stators durch die Zahl der Rotorpole ganzzahlig teilbar ist,
    ferner mit einem zwischen Stator und Rotor vorgesehenen Luftspalt (38), z. B. einem flachen Lustspalt, einem zylindrischen Luftspalt oder einem konischen Luftspalt,
    wobei sich auf der einen Seite des Luftspalts der Rotor und auf der anderen Seite der Stator befindet, welcher Luftspalt in Folge der Form der dem Luftspalt zugewandten Seite des Stators, insbesondere von dort vorgesehenen Nuten (1-12), erste Arten von Diskontinuitäten aufweist, bei welchen, bezogen auf eine gedachte Drehrichtung des Rotors, der Luftspalt (38) innerhalb eines kleinen Drehwinkels von einem kleineren zu einem größeren Wert übergeht - im Folgenden positive Diskontinuitäten genannt -
    und bei welchem der Luftspalt zweite Arten von Diskontinuitäten aufweist, bei welchen er, bezogen auf die genannte gedachte Drehrichtung, innerhalb eines kleinen Drehwinkels von einem größeren zu einem kleineren Wert übergeht - im Folgenden negative Diskontinuitaten genannt -,
und an jedem Übergang zwischen zwei aufeinander folgenden ungleichnamige Rotorpolen (44, 45, 46, 47), die dortige Polgrenze mindestens zwei Abschnitte (50, 52; 58, 60, 62) aufweist, die in Drehrichtung des Rotors gegeneinander um einen Abstand versetzt sind, der etwa der Abstand zwischen einer positiven Diskontinuität und der zu ihr am engsten benachbarten negativen Diskontinuität - im Folgenden Diskontinuitätendistanz (DD) genannt - oder einem ganzzahligen Vielfachen hiervon, entspricht.

2. Elektromotor nach Anspruch 1, bei welchem der Abstand zwischen zwei relativ zueinander versetzten Polgrenzenabschnitten im Bereich des 0,9... 1,1-fachen der Diskontinuitätendistanz (DD) liegt.

3. Elektromotor nach Anspruch 1 oder 2, bei welchem die Diskontinuitätendistanz den Abstand zwischen zwei am engsten benachbarten, für das Reluktanzmoment des Motors relevanten, positiven und negativen Diskontinuitäten des Luftspalts (38) darstellt.

4. Elektromotor nach einem oder mehreren der vorhergehenden Ansprüche, mit einem mit Nuten (1-12) versehenen Stator, wobei der Quotient aus Breite (W) einer Nutöffnung und Diskontinuitätendistanz (DD), oder dessen Kehrwert, mindestens nahezu eine ganze Zahl ist.

5. Elektromotor nach einem oder mehreren der vorhergehenden Ansprüche, mit einem mit Nuter (1-12) versehenen Stator, bei welchem die Diskontinuitätendistanz (DD) mindestens nahezu der Breite (W) einer Nutöffnung entspricht, und die Zahl der gegeneinander versetzten Polgrenzenabschnitte zwei beträgt.

6. Elektromotor nach einem oder mehreren der vorhergehenden Ansprüche, mit einem mit Nuten (1-12) versehenen Stator, bei welchem die Diskontinuitätendistanz (DD) kleiner ist als die Breite (W) einer Nutöffnung, und die Zahl der gegeneinander versetzten Polgrenzenabschnitte gleich dem auf eine ganze Zahl gerundeten Wert von Nutbreite geteilt durch Diskontinuitätendistanz, vermehrt um die Zahl 1, ist.

7. Elektromotor nach einem oder mehreren der vorhergehenden Ansprüche, bei welchem die relativ zueinander versetzten Polgrenzen des Rotors im wesentlichen parallel zu den die Diskontinuitäten bewirkenden Formen an der dem Luftspalt (38) zugewandten Seite des Stators verlaufen.

8. Elektromotor nach einem oder mehreren der vorhergehenden Ansprüche, mit einem mit Nuten (1-12) versehenen Stator, bei welchem auf den zwischen den Nuten gelegenen Zahn köpfen jeweils mindestens eine Vertiefung (134; 160, 161; 185, 186) nach Art einer Hilfsnut vorgesehen ist.

9. Elektromotor nach Anspruch 8, bei welchem die Vertiefungen nach Art von Hilfsnuten (134, 160, 161, 185, 185', 186, 186') mit den zwischen den Zähnen gelegenen, zum Einbringen der Wicklung (123) dienenden Nut öffnungen eine im wesentlichen konstante Nutteilung ($t_N$) bilden.

10. Elektromotor nach Anspruch 7 oder 8, bei welchem die auf den Zähnen gelegenen, nach Art von Hilfsnuten (134, 160, 161, 185, 185', 186, 186') ausgebildeten Vertiefungen ein Verhältnis von Breite zu mittlerer Tiefe aufweisen, das größer als 2 und bevorzugt größer als 3 ist.

11. Elektromotor nach einem oder mehreren der Ansprüche 7 bis 10, bei welchem auf der dem Rotor zugewandten Seite der zwischen den Nuten (1-12) gelegenen Zähne mindestens teilweise jeweils eine Zahl von h Hilfsnuten pro Zahnknopf vorgesehen ist, und das Verhältnis von Nutschlitzbreite (W) einer zwischen den Zähnen gelegenen Nut zur Nutteilung (T) der für die Aufnahme der Wicklung bestimmten Nuten im wesentlichen gegeben ist durch

$$W/T = (1 + t\,(h + 1) + h)^{-1},$$

wobei
t = Zahl der gegeneinander versetzten Polgrenzenabschnitte minus 1;
h = Zahl der Hilfsnuten pro Nutzahn.

12. Elektromotor nach einem oder mehreren der vorhergehenden Ansprüche, mit einem mit Nuten (1-12) versehenen Stator, bei welchem die Nuten mindestens teilweise durch Nutverschlüsse (150; 200) aus weichferromagnetischem Material verschlossen sind.

13. Elektromotor nach Anspruch 12, bei welchem die Nutverschlüsse auf ihrer dem Rotor (40) zugewandten Seite in ihrem Mittelbereich jeweils einen kleineren Abstand vom Rotor aufweisen als außerhalb dieses Mittelbereichs.

14. Elektromotor nach einem oder mehreren der vorhergehenden Ansprüche, bei welchem die gegeneinander versetzten Polgrenzen (192', 192", 194', 194", 196', 196", 198') Zwischen benachbarten Rotorpolen (44, 45, 46, 47) in der Draufsicht auf den Rotorumfang gesehen, einen etwa pfeilförmigen Verlauf aufweisen.

15. Elektromotor nach einem oder mehreren der vorhergehenden Ansprüche, bei welchem Übergänge (111, 112) zwischen gegeneinander versetzten Abschnitte (106, 108, 114) der Polgrenzen geschrägt sind.

16. Elektromotor nach einem oder mehreren der vorhergehenden Ansprüche, welcher dreisträngig ausgebildet ist.

17. Elektromotor nach Anspruch 16, dessen Statorwicklung im Dreieck geschaltet und gesehnt ist.

18. Elektromotor nach Anspruch 17, bei welchem die Sehnung so ausgelegt ist, daß, bei trapezförmiger Magnetisierung des Rotors, eine Reduzierung der dritten Harmonischen der induzierten Spannung (130) stattfindet.

19. Elektromotor nach Anspruch 17 oder 18, bei welchem die Spulenweite in der gesehnten Wicklung etwa 120° el. beträgt.

20. Elektromotor nach einem oder mehreren der vorhergehenden Ansprüche, bei welchem die Breite (W) einer Nutöffnung größer ist als eine halbe Nutteilung ($t_N$), falls Hilfsnuten (185, 186) vorhanden gerechnet einschließlich dieser, wobei das Verhältnis von Nutschlitzbreite (W) der die Statorwicklung (123) aufnehmenden Hauptnuten (1 bis 12) zu deren Nutteilung (T) etwa folgender Bedingung genügt:

$$W/T = (1+t\,(h+1)+h)^{-1},$$

wobei
t = Kehrwert von (Zahl Q der versetzten Rotorpolgrenzenabschnitte minus 1), also $t=(Q-1)^{-1}$
h = Zahl der Hilfsnuten pro Statorzahn (116").

21. Verfahren zum Reduzieren des als "Nutrucken" bezeichneten Reluktanzmoments bei einem Elektromotor, der einen mit Nuten (1-12) für die Wicklung versehenen Stator aufweist, dessen Nutzähne jeweils mit mindestens einer Hilfsnut (134, 160, 161, 185, 185', 186, 186') versehen sind, und der einen permanentmagnetischen Rotor (40) aufweist, welcher vom Stator (30) durch einen Luftspalt (38) getrennt ist, z.B. durch einen ebenen, zylindrischen oder konischen Luftspalt, und dessen Polgrenzen jeweils mindestens zwei zueinander um einen vorgegebenen Winkelabstand in Umfangsrichtung versetzte Polgrenzenabschnitte aufweisen,
mit folgenden Schritten:

    a) das Reluktanzmoment wird ermittelt, das bei Drehung dieses Rotors (40) relativ zum Stator (30) auftritt;
    b) auf der dem Luftspalt (38) zugewandten Seite des Stators wird eine Eisenschicht vorbestimmter Dicke entfernt, z.B. durch Abschleifen, wodurch die Tiefe (e) der Hilfsnuten (134) abnimmt;
    c) mit dem Rotor wird das Reluktanzmoment ermittelt, das mit der neuen Statorkonfiguration bei Drehung des Rotors auftritt;
    d) abhängig von einem Vergleich der Resultate der Schritte a) und c) wird der Schritt b) ggf. wiederholt.

**Claims**

1. Electric motor, in particular electronically commutated motor, with a slotted stator (30) and a rotor (40) which comprises rotor poles (44-47, 98, 99) which have trapezoidal or rectangular magnetisation, wherein the number of stator teeth (31, 32, 34, 36, 116, 116', 116") of the slotted stator is divisible integrally by the number of rotor poles, further with an air gap (38) provided between the stator and the rotor, e.g. a flat air gap, a cylindrical air gap or a conical air gap, wherein the rotor is located on one side of the air gap and the stator on the other side, which air gap as a result of the shape of the side of the stator facing the air gap, in particular slots (1-12) provided there, comprises first kinds of discontinuities with which, in relation to an imaginary direction of rotation of the rotor, the air gap (38) changes from a fairly small to a fairly large value within a small angle of rotation - referred to in the following as positive discontinuities - and with which the air gap comprises second kinds of discontinuities with which, in relation to the named imaginary direction of rotation, it changes from a fairly large to a fairly small value within a small angle of rotation - referred to in the following as negative discontinuities - and at every change between two following unlike rotor poles (44, 45, 46, 47) the pole boundary there comprises at least two portions (50, 52; 58, 60, 62) which are offset in relation to one another in the direction of rotation of the rotor by a distance which roughly corresponds to the distance between a positive discontinuity and the neighbouring negative discontinuity closest to it - referred to in the following as discontinuity distance (DD) - or an integral multiple hereof.

2. Electric motor according to claim 1, wherein the distance between two pole boundary portions offset relative to one another lies in the area of 0.9 ... 1.1 times the discontinuity distance (DD).

3. Electric motor according to claim 1 or 2, wherein the discontinuity distance represents the distance between two closest neighbouring positive and negative discontinuities of the air gap (38) relevant to the reluctance moment of the motor.

4. Electric motor according to one or more of the preceding claims, with a stator provided with slots (1-12), wherein the quotient of width (W) of a slotted opening and discontinuity distance (DD), or its reciprocal, is at least almost an integer.

5. Electric motor according to one or more of the preceding claims, with a stator provided with slots (1-12), wherein the discontinuity distance (DD) corresponds at least almost to the width (W) of a slotted opening, and the number of pole boundary portions offset in relation to one another is two.

6. Electric motor according to one or more of the preceding claims, with a stator provided with slots (1-12), wherein the discontinuity distance (DD) is less than the width (W) of a slotted opening, and the number of pole boundary portions offset in relation to one another is equal to the value of the slot width rounded to an integer divided by the discontinuity distance, plus the number 1.

7. Electric motor according to one or more of the preceding claims, wherein the pole boundaries of the rotor offset in relation to one another essentially run parallel to the shapes producing the discontinuities on the side of the stator facing the air gap (38).

8. Electric motor according to one or more of the preceding claims, with a stator provided with slots (1-12), wherein at least one recess (134; 160, 161; 185, 186) in the form of an auxiliary slot is provided on the head of each tooth located between the slots.

9. Electric motor according to claim 8, wherein the recesses in the form of auxiliary slots (134, 160, 161, 185, 185', 186, 186') with the slotted openings located between the teeth and serving for the introduction of the winding (123) form an essentially constant slot division ($t_N$).

10. Electric motor according to claim 7 or 8, wherein the recesses embodied in the form of auxiliary slots (134, 160, 161, 185, 185', 186, 186') located on the teeth have a ratio of width to average depth which is greater than 2 and preferably greater than 3.

11. Electric motor according to one or more of claims 7 to 10, wherein in each case a number of h auxiliary slots per tooth head is provided on the side of at least some of the teeth located between the slots (1-12) facing the rotor, and the ratio of the slot width (W) of a slot located between the teeth to the slot division (T) of the slots designed for reception of the winding is essentially defined by

$$W/T = (1 + t \, (h + 1) + h)^{-1},$$

in which
t = number of pole boundary portions offset in relation to one another minus 1;
h = number of auxiliary slots per slot tooth.

12. Electric motor according to one or more of the preceding claims, with a stator provided with slots (1-12), wherein the slots are at least partly closed by slot closures (150; 200) of soft ferromagnetic material.

13. Electric motor according to claim 12, wherein in their middle area on their side facing the rotor (40) the slot closures are each a smaller distance from the rotor than outside this middle area.

14. Electric motor according to one or more of the preceding claims, wherein the pole boundaries offset in relation to one another (192', 192", 194', 194", 196', 196", 198') between neighbouring rotor poles (44, 45, 46, 47), viewed in the plan view of the circumference of the rotor, are roughly arrow-shaped.

15. Electric motor according to one or more of the preceding claims, wherein changes (111, 112) between offset portions (106, 108, 114) of the pole boundaries are bevelled.

16. Electric motor according to one or more of the preceding claims, which has three phase windings.

17. Electric motor according to claim 16, the stator winding of which is delta-connected and chorded.

18. Electric motor according to claim 17, wherein the chording is so designed that with trapezoidal magnetisation of the rotor a reduction occurs in the third harmonic of the induced voltage (130).

19. Electric motor according to claim 17 or 18, wherein the coil width in the chorded winding is roughly 120° el.

20. Electric motor according to one or more of the preceding claims, wherein the width (W) of a slot opening is greater than half a slot division ($t_N$), including auxiliary slots (185, 186) when these are present, the ratio of the slot width (W) of the main slots (1 to 12) receiving the stator winding (123) to their slot division (T) roughly satisfying the following condition:

$$W/T = (1 + t (h + 1) + h)^{-1},$$

in which

t = reciprocal of (number Q of the offset rotor pole boundary portions minus 1), i.e. $t = (Q - 1)^{-1}$
h = number of auxiliary slots per stator tooth (116").

21. Method for reducing the reluctance moment - referred to as "cogging" - of an electric motor which comprises a stator provided with slots (1-12) for the winding and the slot teeth of which are each provided with at least one auxiliary slot (134, 160, 161, 185, 185', 186, 186'), and which comprises a permanent magnet rotor (40) which is separated from the stator (30) by an air gap (38), e.g. by a flat, cylindrical or conical air gap, and the pole boundaries of which each comprise at least two pole boundary portions which are offset in relation to one another by a predetermined angular distance in the circumferential direction,
with the following steps:

a) the reluctance moment which occurs when this rotor (40) turns relative to the stator (30) is determined;
b) on the side of the stator facing the air gap (38) a layer of iron of predetermined thickness is removed, e.g. by grinding, through which the depth (e) of the auxiliary slots (134) is reduced;
c) the reluctance moment which occurs with the new stator figuration when the rotor turns is determined with the rotor;
d) the step b) is repeated if necessary depending on a comparison of the results of the steps a) and c).

**Revendications**

1. Moteur électrique, en particulier moteur à commutation électronique, avec un stator (30) à encoches et un rotor (40) lequel présente des pôles de rotor (44 - 47, 98, 99) qui présentent une magnétisation trapézoïdale ou rectangulaire, le nombre de dents de stator (31, 32, 34, 36, 116, 116', 116") du stator à encoches étant divisible de façon entière par le nombre de pôles de rotor,
ainsi qu'avec un entrefer (38), par exemple un entrefer plan, un entrefer cylindrique ou un entrefer conique, prévu entre le stator et le rotor,
le rotor se trouvant d'un côté de l'entrefer et le stator de l'autre côté,

lequel entrefer présente par suite de la forme du côté du stator tourné vers l'entrefer, en particulier d'encoches (1 - 12) qui y sont prévues, de premières sortes de discontinuités au niveau desquelles, par rapport à un sens de rotation imaginaire du rotor, l'entrefer (38) passe, en un petit angle de rotation, d'une valeur plus petite à une valeur plus grande - appelées dans la suite discontinuités positives - et dans lequel l'entrefer présente de deuxièmes sortes de discontinuités au niveau desquelles, par rapport au sens de rotation imaginaire mentionné, il passe, en un petit angle de rotation, d'une valeur plus grande à une valeur plus petite - appelées dans la suite discontinuités négatives -,
et à chaque transition entre deux pôles de rotor successifs de noms différents (44, 45, 46, 47) la limite de pôle à cet endroit présente au moins deux sections (50, 52, 58, 60, 62) qui sont décalées l'une par rapport à l'autre dans le sens de rotation du rotor d'une distance qui correspond à peu près à la distance entre une discontinuité positive et la discontinuité négative qui lui est la plus étroitement adjacente - appelée dans la suite distance entre discontinuités (DD) - ou à un multiple entier de celle-ci.

2. Moteur électrique selon la revendication 1, dans lequel la distance entre deux sections de limites de pôles décalées l'une par rapport à l'autre est de l'ordre de 0,9 à 1,1 fois la distance entre discontinuités (DD).

3. Moteur électrique selon la revendication 1 ou 2, dans lequel la distance entre discontinuités représente la distance entre deux discontinuités positives et négatives le plus étroitement adjacentes significatives pour le moment de réluctance du moteur.

4. Moteur électrique selon l'une ou plusieurs des revendications précédentes, avec un stator muni d'encoches (1 - 12), dans lequel le quotient de la largeur (w) d'une ouverture d'encoche et de la distance entre discontinuités (DD), ou son inverse, est au moins presque un nombre entier.

5. Moteur électrique selon l'une ou plusieurs des revendications précédentes, avec un stator muni d'encoches (1 - 12), dans lequel la distance entre discontinuités (DD) correspond au moins presque à la largeur (w) d'une ouverture d'encoche et le nombre de sections de limites de pôles décalées l'une par rapport à l'autre est de deux.

6. Moteur électrique selon l'une ou plusieurs des revendications précédentes, avec un stator muni d'encoches (1 - 12), dans lequel la distance entre discontinuités (DD) est plus petite que la largeur (w) d'une ouverture d'encoche et le nombre de sections de limites de pôles décalées l'une par rapport à l'autre est égal à la valeur arrondie à un nombre entier de la largeur d'encoche divisée par la distance entre discontinuités, majorée du nombre 1.

7. Moteur électrique selon l'une ou plusieurs des revendications précédentes, dans lequel les limites de pôles du rotor décalées l'une par rapport à l'autre sont essentiellement parallèles aux formes produisant les discontinuités sur le côté du stator tourné vers l'entrefer (38).

8. Moteur électrique selon l'une ou plusieurs des revendications précédentes, avec un stator muni d'encoches (1 - 12), dans lequel il est prévu sur les têtes de dents situées entre les encoches chaque fois au moins un renfoncement (134 ; 160 ; 161 , 185 ; 186) à la manière d'une encoche auxiliaire

9. Moteur électrique selon la revendication 8, dans lequel les renfoncements à la manière d'encoches auxiliaires (134, 160, 161, 185, 185', 186, 186') forment avec les ouvertures d'encoches situées entre les dents, servant à la mise en place de l'enroulement (123), un pas d'encoches ($t_N$) essentiellement constant.

10. Moteur électrique selon la revendication 7 ou 8, dans lequel les renfoncements à la manière d'encoches auxiliaires (134, 160, 161, 185, 185', 186, 186') situés sur les dents présentent un rapport de la largeur à la profondeur moyenne qui est supérieur à 2 et de préférence supérieur à 3.

11. Moteur électrique selon l'une ou plusieurs des revendications 7 à 10, dans lequel il est prévu du côté tourné vers le rotor des dents situées entre les encoches (1 - 12) au moins partiellement chaque fois un nombre de h encoches auxiliaires par tête de dent, et le rapport de la largeur de fente d'encoche (W) d'une encoche située entre les dents au pas d'encoches (T) des encoches destinées à recevoir l'enroulement est essentiellement donné par

$$W/T = (1 + t(h + 1) + h)^{-1},$$

où
t = nombre de sections de limites de pôles décalées l'une par rapport à l'autre moins 1 ;
h = nombre d'encoches auxiliaires par dent d'encoche.

12. Moteur électrique selon l'une ou plusieurs des revendications précédentes, avec un stator muni d'encoches (1 - 12), dans lequel les encoches sont fermées au moins partiellement par des fermetures d'encoche (150 ; 200) en matériau ferromagnétique doux.

13. Moteur électrique selon la revendication 12, dans lequel les fermetures d'encoche présentent de leur côté tourné vers le rotor (40) une plus petite distance au rotor dans leur partie centrale qu'en dehors de cette partie centrale.

14. Moteur électrique selon l'une ou plusieurs des revendications précédentes, dans lequel les limites de pôles décalées l'une par rapport à l'autre (192', 192", 194', 194", 196', 196", 198') entre des pôles de rotor adjacents (44, 45, 46, 47) présentent, en vue de dessus sur la circonférence du rotor, un tracé à peu près en forme de flèche.

15. Moteur électrique selon l'une ou plusieurs des revendications précédentes, dans lequel les transitions (111, 112) entre des sections (106, 108, 114) décalées l'une par rapport à l'autre des limites de pôles sont obliques.

16. Moteur électrique selon l'une ou plusieurs des revendications précédentes, lequel est de type triphasé.

17. Moteur électrique selon la revendication 16 dont l'enroulement statorique est couplé en triangle et enroulé à pas raccourci.

18. Moteur électrique selon la revendication 17, dans lequel le raccourcissement du pas est tel qu'en cas de magnétisation trapézoïdale du rotor il se produit une réduction des troisièmes harmoniques de la tension induite (130).

19. Moteur électrique selon la revendication 17 ou 18, dans lequel le pas de bobinage dans l'enroulement à pas raccourci est d'environ 120°

20. Moteur électrique selon l'une ou plusieurs des revendications précédentes, dans lequel la largeur (W) d'une ouverture d'encoche est plus grande qu'un demi-pas d'encoche ($t_N$), calculée encoches auxiliaires (185, 186) comprises si celles-ci existent, le rapport de la largeur de fente d'encoche (W) des encoches principales (1 à 12) recevant l'enroulement statorique (123) à leur pas d'encoches (T) satisfaisant à peu près à la condition :

$$W/T = (1 + t(h + 1) + h)^{-1},$$

où
t = inverse de (nombre Q de sections de limites de pôles décalées moins 1), soit $t=(Q - 1)^{-1}$ ;
h = nombre d'encoches auxiliaires par dent de stator (116").

**21.** Procédé pour réduire le moment de réluctance, appelé « à-coups d'encoches », dans un moteur électrique qui présente un stator muni d'encoches (1 - 12) pour l'enroulement, dont les dents d'encoches sont munies chacune d'au moins une encoche auxiliaire (134, 160, 161, 185, 185', 186, 186'),
et qui présente un rotor (40) à aimant permanent qui est séparé du stator (30) par un entrefer (38), par exemple un entrefer plan, cylindrique ou conique ;
et dont les limites de pôles présentent chacune au moins deux sections de limites de pôles décalées l'une par rapport à l'autre d'une distance angulaire donnée en direction circonférentielle,
comportant les pas suivants :

a) on détermine le moment de réluctance qui apparaît lors de la rotation de ce rotor (40) par rapport au stator (30) ;
b) on enlève, par exemple par meulage, du côté du stator tourné vers l'entrefer (38) une couche de fer d'épaisseur prédéterminée, suite à quoi la profondeur (e) des encoches auxiliaires (134) diminue ;
c) on détermine avec le rotor le moment de réluctance qui apparaît lors de la rotation du rotor avec la nouvelle configuration de stator ;
d) en fonction de la comparaison du résultat des pas a) et c), on répète le cas échéant le pas b).

Fig. 1

Fig.2

Fig.3

Fig. 4

**Fig.5**

**Fig.6**

_123_

U    V    W

*Fig. 7*

_126_    T1    T2    T3

B1    B2    B3

U

_104_

_100_

_123_

W    V

*Fig. 8*

EP 0 762 619 B1

| | ① | ② | ③ | ④ | ⑤ | ⑥ | ① |
|---|---|---|---|---|---|---|---|
| T1 | ON | ON | OFF | OFF | OFF | OFF | ON |
| B1 | OFF | OFF | OFF | ON | ON | OFF | OFF |
| T2 | OFF | OFF | ON | ON | OFF | OFF | OFF |
| B2 | ON | OFF | OFF | OFF | OFF | ON | ON |
| T3 | OFF | OFF | OFF | OFF | ON | ON | OFF |
| B3 | OFF | ON | ON | OFF | OFF | OFF | OFF |

← —— 360°el —— →

Fig.9

Fig. 10

22

Fig. 11

Fig. 12

Fig. 13

Fig. 14

Fig. 15

Fig. 16

Fig. 17

Fig. 18

Fig. 19

Fig.20

Fig.21

29

*Fig. 22*

192R

196R

197

$\alpha$

−15°el    0°el    +15°el

Fig. 23

192'

194'

104"

196'

72

98"    198'    99"

196"    d

194"    d

N    S

192"    d

Fig. 24